# EUROPÄISCHE PATENTSCHRIFT

(11) **EP 0 280 203 B1**
(45) Veröffentlichungstag und Bekanntmachung des Hinweises auf die Patenterteilung: **03.08.1994**
(21) Anmeldenummer: 88102413.7
(22) Anmeldetag: 19.02.1988
(51) Int. Cl.: B29C 55/24, B29C 55/30, B29C 57/00, B29C 31/00

(54) **Verfahren und Vorrichtung zum Herstellen von Hohlkörpern aus orientiertem thermoplastischem Kunststoff**
Process and apparatus for making hollow articles of oriented thermoplastic material
Procédé et appareil pour la fabrication de corps creux en matière thermoplastique orientée

(30) Priorität: 25.02.1987 DE 3705947
(43) Veröffentlichungstag der Anmeldung: 31.08.1988
(73) Patentinhaber: KRUPP CORPOPLAST MASCHINENBAU GMBH, 22123 Hamburg (DE)
(72) Erfinder: Albrecht, Peter, D-2050 Hamburg 80 (DE); Balkau, Karl-Heinz, D-2000 Oststeinbek (DE); Cujic, Vinco, D-2000 Hamburg 60 (DE); Döring, Tilman, D-2000 Hamburg 61 (DE); Horwege, Claus, D-2000 Hamburg 76 (DE); Reymann, Wolfgang, D-2000 Hamburg 67 (DE); Vogel, Klaus, D-2000 Barsbüttel (DE); Wiedenfeld, Walter, D-2000 Hamburg 62 (DE)
(74) Vertreter: Klickow, Hans-Henning

(56) Entgegenhaltungen:
- WO-A-86/00565
- WO-A-86/03713
- DE-A- 3 101 283
- FR-A- 437 036
- FR-A- 2 516 895
- US-A- 3 812 696
- US-A- 4 412 966

## Beschreibung

Die Erfindung betrifft ein Verfahren zum Herstellen von Hohlkörpern aus orientiertem thermoplastischem Kunststoff, die mit einem Boden, einer daran anschließenden Wandung und einer Öffnung versehen sind, wobei ein hohler, mit einer im wesentlichen zylindrischen Wandung und einem Boden versehener Formling einer aus mehreren Schritten bestehenden Behandlung unterzogen und wenigstens die Wandung thermofixiert wird, und daß während der Behandlung der die Öffnung aufweisende Endbereich des Formling voraufgeweitet, das voraufgeweitete Ende durch Klemmittel eingeklemmt und danach durch eine Relativbewegung zwischen einem beheizten Temperierdorn und dem Formling in letzteren der an der Wandung des Formlings anliegende Temperierdorn eingeführt wird, durch welchen zumindest die Wandung des Formlings auf die für die Thermofixierung erforderliche Temperatur erwärmt wird.

Die Erfindung betrifft darüber hinaus eine Vorrichtung zum Herstellen von Hohlkörpern aus orientiertem thermoplastischen Kunststoff, bei welchem die Wandung eines hohlen, mit einem Boden versehenen Formlings durch einen in den Formling einzuführenden beheizten Temperierdorn thermofixiert wird.

Außerdem betrifft die Erfindung eine Vorrichtung zum Herstellen von Hohlkörpern aus orientiertem thermoplastischen Kunststoff gemäß dem Oberbegriff des Anspruchs 22.

Ein solches Verfahren wird, vorzugsweise unter Verwendung von Vorformlingen aus linearen Polyestern, also beispielsweise Polyäthylenterephtalat (PETP) oder Polybutylenterephtalat (PBTP), z. B. dann benutzt, wenn Behälter für Füllgüter, die unter hohem Überdruck stehen, wie z.B. kohlensäurehaltige Getränke, herzustellen sind.

Dieses Verfahren kann beispielsweise so ablaufen, daß durch Strecken der Wandung eines Formlings bei einer Temperatur unter der Glasumwandlungstemperatur des ihn bildenden Materials ein Zwischenerzeugnis hergestellt wird, welches zumindest über den größten Teil seiner Längserstreckung aufgeweitet und dann thermofixiert wird.

Bei einer anderen Verfahrensvariante wird zunächst durch Streckblasformen ein Zwischenerzeugnis hergestellt, wobei das sich bildende Kunststoffmaterial bereits eine Orientierung in axialer Richtung und in Umfangsrichtung während des Streckblasformens erfahren hat. Hier wird es im wesentlichen nur noch erforderlich sein, die Wandung des Zwischenerzeugnisses zu thermofixieren. Unabhängig vom Herstellungsverfahren des Zwischenerzeugnisses soll das Thermofixieren gewährleisten, daß das Enderzeugnis bis zu einer bestimmten Maximaltemperatur, die bei Behältern beispielsweise zur Sterilisierung des Füllgutes erforderlich ist, erhitzt werden kann, ohne daß das Enderzeugnis durch die Erwärmung eine ins Gewicht fallende Änderung seiner Gestalt erfährt. Insbesondere soll vermieden werden, daß das den Behälter oder ein anderes Enderzeugnis bildende Kunststoffmaterial unter der Wärmeeinwirkung schrumpft.

Der thermofixierte Hohlkörper kann, wiederum unabhängig vom Herstellungsverfahren des Zwischenerzeugnisses, im Bedarfsfall noch weiteren Behandlungen unterzogen werden, beispielsweise zum Zwecke der Verformung der an seiner Öffnung angrenzenden Wandbereiche, um so eine Dose herzustellen, die mit einem herkömmlichen Deckel verschlossen werden kann.

Aus der WO-A-86/03 713 ist ein gattungsbildender Stand der Technik bekannt. Zur Herstellung von einem Hohlkörper aus orientiertem thermoplastischem Kunststoff wird in einen Formling ein Temperierdorn eingeführt, der zu einer Thermofixierung des Materials der Wandung des Formlings vorgesehen ist. Während des Formvorganges wird ein Endbereich des Formlinges vor-aufgeweitet und durch Klemmittel eingeklemmt. Nach der Voraufweitung erfolgt die Thermofixierung mit Hilfe des Temperierdorns. Während der Durchführung des Thermofixiervorganges liegt der Temperierdorn an der Wandung des Formlings an.

Aus der DE-A-3 101 283 ist es bekannt, einen Vorformling aus einem Rohrabschnitt herzustellen. Der Vorformling wird dazu an seinen beiden Enden auf Umformtemperatur erwärmt und im Bereich seines einen Endes verschlossen und im Bereich seines anderen Endes mit einem Mündungsprofil versehen. Bei der Formung des verschlossenen Endes wird ein Stützdorn eingeführt und der Bodenbereich an seinem Außenumfang von einem Formwerkzeug umfaßt. Die Formung des Mündungsbereiches erfolgt im wesentlichen durch Verdrängung von erwärmten Material mit Hilfe eines Formdornes.

Aus der FR-A-2 516 895 ist es bekannt, durch einen Ziehvorgang aus einem Formling einen becherförmigen Behälter herzustellen, der im Bereich seiner Mündung mit einem Flansch versehen ist. Zur Bereitstellung einer ausreichenden Materialfestigkeit werden beheizte Formelemente bereitgestellt. Die endgültige Formung des Behälters erfolgt durch einen Blasvorgang.

In der US-A-4 412 966 wird ein Verfahren zur Formung eines Behälters beschrieben, bei dem eine Aufweitung einer Behältermündung mit Hilfe eines konisch geformten Dornes erfolgt, der in den Mündungsbereich hineingedrückt wird. Die Voraufweitung ermöglicht die Bereitstellung eines orientierten Mündungsbereiches.

Der Erfindung liegt unter anderem die Aufgabe zugrunde, das Verfahren und die Vorrichtung der einleitend beschriebenen Art so auszugestalten, daß der Thermofixiervorgang und gegebenenfalls notwendige Formgebungsvorgänge in einfacher Weise unter Verwendung unkomplizierter Mittel durchgeführt werden können. Dabei soll insbesondere der Tatsache Rechnung getragen werden, daß die unter Anwendung der Erfindung herzustellenden Hohlkörper, insbesondere Behälter, normalerweise in sehr großen Stückzahlen benötigt werden, so daß demzufolge das Verfahren und die Vorrichtung gemäß der Erfindung auch für die Massenproduktion derartiger Hohlkörper geeignet sind.

Zur Lösung dieser Aufgabe schlägt die Erfindung vor, daß vor einem Einführen des Temperierdorns ein Haltedorn in den Formling eingeführt wird, der den Boden des Formlings zwischen sich und einem Bodendorn fixiert und daß der Temperierdorn hülsenförmig über den Haltedorn geschoben wird und daß die Wandung des Formlings vor einem Einführen des Temperierdorns unterhalb des voraufgeweiteten Endbereiches zwischen dem Haltedorn und einer den Bodendorn hülsenförmig umgebenden Stützhülse eingeschlossen wird.

Bezüglich der Vorrichtung wird die Aufgabe dadurch gelöst, daß zum Voraufweiten des Endbereichs des Formlings ein in dessen offenes Ende einführbarer, beheizter konischer Dorn vorgesehen ist, der mit seinem in den Formling einzuführenden Endbereich an den Querschnitt des Formlings angepaßt ist und sich zu seinem freien Ende hin verjüngt, wobei der das Aufweiten des Formlings bewirkende Bereich des Dornes durch eine Fläche begrenzt ist, die im Längsschnitt linear oder konkav verläuft, und daß der Temperierdorn hülsenförmig auf einem in den Formling einführbaren Haltedorn geführt ist.

Bezüglich einer weiteren Vorrichtung wird die Aufgabe erfindungsgemäß durch Merkmale des Anspruchs 22 gelöst.

Das Vor-Aufweiten des Formlings erfüllt im wesentlichen zwei Zwecke: Einmal dient es dem Einführen des Temperierdorns, der, da der Temperiervorgang einen guten Kontakt zwischen der Mantelfläche des Temperierdorns sowie der inneren Oberfläche der Formlingswandung voraussetzt, zumindest einen Außendurchmesser aufweisen muß, der nicht kleiner ist als der Innendurchmesser des Formlings, zweckmäßig sogar etwas größer ist. Ohne Vor-Aufweiten des die Öffnung umgebenden Endbereiches des Formlings auf einen Querschnitt, der größer ist als der Querschnitt des Temperierdorns, wäre ein Einführen des letzteren in den Formling jedenfalls nicht mit der Schnelligkeit und Sicherheit gewährleistet, die für die Massenproduktion erforderlich ist. Dabei ist zu berücksichtigen, daß es im allgemeinen nicht möglich sein wird, den Temperierdorn zu seinem freien Ende hin sich verjüngend auszuführen, da dies den gewünschten Kontakt zwischen der Mantelfläche des Temperierdorns und der Wandung des Formlings ausschlösse. Die andere Funktion des Vor-Aufweitens des Formlings besteht darin, im Bereich der Formlingsöffnung einen gegenüber dem ansonsten axialen Verlauf der Formlingswandung nach außen abgebogenen Rand zu schaffen, an welchem das Klemmittel angreift, welches während der Relativbewegung zwischen Formling und Temperierdorn ersteren hält, so daß der Formling unter der Einwirkung der durch die Mantelfläche des Temperierdorns während der Relativbewegung auf ihn übertragenen Reibungskräfte keine unzulässigen Verformungen, beispielsweise durch Bildung von Falten, erfährt oder keine Ausweichbewegungen ausführt.

Bei den einzelnen am Formling durchzuführenden Behandlungsschritten ist zu berücksichtigen, daß der Formling im allgemeinen sehr dünnwandig sein wird, so daß die am Formling beispielsweise zur Durchführung von Formgebungsvorgängen angreifenden Kräfte in jedem Fall so dosiert und verteilt sein müssen, daß ungewollte und insbesondere unregelmäßige Verformungen, wie beispielsweise Faltenbildung durch Stauchung, in jedem Fall vermieden werden. Dies gilt insbesondere bei solchen Formgebungsvorgängen, bei denen der Formling nicht über seine gesamte Erstreckung durch besondere Stütz- und Halteelemente derartig abgestützt und gehalten wird, daß Verformungen des Formlings nur dann und dort erfolgen können, wenn beziehungsweise wo die Stütz-und Halteelemente entsprechende Bereiche des Formlings für die Durchführung eines Formgebungsvorganges freigeben.

Diesem Sachverhalt wird beim Vor-Aufweiten des Endbereiches des Formlings dadurch Rechnung getragen, daß in die Öffnung des Formlings ein in Richturg auf sein freies Ende sich verjüngender, beheizter Dorn eingeführt wird, der unter der Einwirkung eines in Richtung auf den Formling wirkenden Federmittels steht und zum Erweichen des vor-aufzuweitenden Endbereiches eine dafür geeignete Temperatur aufweist, und die durch das Federmittel auf den Dorn ausgeübte Kraft so bemessen ist, daß eine das Vor-Aufweiten des Endbereiches bewirkende Verformung erst bei Erreichen einer bestimmten Temperatur und einer dadurch bewirkten Erweichung des unter der Einwirkung des Dorns stehenden Endbereiches der Wandung eintritt. Das freie Ende des Dorns weist dabei einen Außendurchmesser auf, der kleiner ist, als der Innendurchmesser der Öffnung des Formlings vor dem Vor-Aufweiten des die Öffnung begrenzenden Bereiches. Die vorbeschriebene Verfahrensweise hat den Vorteil, daß eine verhältnismäßig geringe Kraft ausreicht, die vom sich verjüngenden Dorn auf den Endbereich der Wandung des Formlings ausgeübt wird, um diesen vor-aufzuweiten. Der Ablauf dieses Vor-Aufweitvorganges erfolgt dabei selbsttätig derart, daß der Erweichungsgrad des vor-aufzuweitenden Endbereiches bei gegebener auf den Dorn einwirkender Kraft den Ablauf des Vor-Aufweit-Vorganges bestimmt. Es kann somit auf einen Zwangsantrieb des Dornes verzichtet werden, wobei möglicherweise von Formling zu Formling gewisse Schwankungen bezüglich der Dauer des Vor-Aufweitvorganges auftreten können, wenngleich diese sehr gering bleiben unter der Voraussetzung, daß die Wandstärke der Formlinge keinen oder nur geringen Schwankungen unterliegt. Um die Länge des Endbereiches, der vor-aufzuweiten ist, in jedem Fall von Formling zu Formling konstant zu halten, ist es zweckmäßig, daß der vom Dorn während des Vor-Aufweitvorganges zurückzulegende Weg, zum Beispiel durch einen Anschlag, begrenzt ist.

Im übrigen ist es vorteilhaft, während des Vor-Aufweitens des Endbereiches des Formlings letzteren mit innerem Überdruck zu beaufschlagen. Dies kann durch Druckluft geschehen, die zweckkmäßig durch einen im für das Vor-Aufweiten benutzten Dorn befindlichen Kanal in den Formling eingeführt wird.

Bei Verwendung eines etwa konisch sich zum freien Ende hin verjüngenden Dorns für das Vor-Aufweiten erhält der Endbereich des Formlings eine etwa kelchartige Form, wobei der größte Innendurchmesser des vor-aufgeweiteten Bereiches am Ende des Formlings so gewählt ist, daß einerseits der Rand dieses Bereichs eingeklemmt werden kann und andererseits durch den eingeklemmten Rand hindurch der Temperierdorn in den Formling eingeführt werden kann. Überdies kann der Verlauf der Mantelfläche des für das Vor-Aufweiten benutzten Dorns so ausgebildet sein, daß der Rand des vor-aufgeweiteten Endbereiches stärker nach außen abgebogen ist als der daran anschließende Übergang zum nicht vor-aufgeweiteten Bereich der Formlingswandung, um so die Winkelstellung des Randes gegenüber der Achse des Formlings gegebenenfalls an die Ausgestaltung und Lage der Klemmittel anzupassen, durch die der Formling beim Einführen des Temperierdornes gehalten wird.

Zur Erzielung der durch den Temperiervorgang angestrebten Thermostabilität des herzustellenden Hohlkörpers ist es erforderlich, daß die dazu erforderliche Erwärmung des Formlings möglichst gleichmäßig erfolgt, um das Vorhandensein von Bereichen unterschiedlicher Thermostabilität im herzustellenden Hohlkörper zu vermeiden. Außerdem soll zur Erzielung einer großen Durchsatzleistung die für die Erwärmung des Dornes auf die für die Thermofixierung erforderliche Temperatur möglichst schnell erfolgen. Aus diesem Grunde ist es vorteilhaft, daß der Temperierdorn zur Erzielung eines gleichmäßigen Wärmeüberganges vom Temperierdorn auf die zu temperierenden Bereiche des Formlings einen Außendurchmesser aufweist, der zumindest geringfügig größer ist als der Innendurchmesser des Formlings, so daß beim Einführen des Temperierdorns in den Formling letzterer eine zumindest geringfügige Aufweitung erfährt. Diese kann, solange es nur um die Erzielung eines guten Kontaktes zwischen Temperierdorn und Wandung des Formlings geht, so gering sein, daß sie die physikalischen Eigenschaften des Formlings beziehungsweise des daraus herzustellenden Hohlkörpers nicht merklich beeinflußt.

Andererseits besteht aber auch die Möglichkeit, den Temperierdorn mit einem Außendurchmesser zu versehen, der merklich größer ist als der Innendurchmesser des nicht vor-aufgeweiteten Wandbereiches des Formlings, so daß zumindest der nicht vor-aufgeweitete Bereich des Formlings zur Orientierung in Umfangsrichtung des ihn bildenden thermoplastischen Materials eine merkliche Querschnittsvergrößerung erfährt.

Ob der Temperierdorn auch gleichzeitig zur Durchführung einer so großen Durchmesservergrößerung des Formlings benutzt wird, daß diese Durchmesservergrößerung zugleich eine Orientierung des die Formlingswandung bildenden Materials zur Folge hat, hängt, wie bereits erläutert worden war, im wesentlichen davon ab, welche Herstellungsschritte der Formling bis zum Temperiervorgang beziehungsweise dem diesen vorgeschalteten Vor-Aufweiten durchlaufen hat. Wenn bei diesen vorangegangenen Behandlungschritten das die Wandung des Formlings bildende Material auch bereits in Umfangsrichtung orientiert worden ist, bedarf es im allgemeinen keiner Durchmesservergrößerung durch den Temperierdorn zum Zwecke der Orientierung des Kunststoffmaterials.

Das Thermofixieren des Formlings erfolgt bei Verwendung z. B. von PETP normalerweise bei einer Temperatur von nicht weniger als 150 °C , wobei die Einwirkungsdauer der Wärme bei dieser Temperatur auf den Formling so bemessen ist, daß eine Kristallisation des thermoplastischen Materials eintritt. Bei anderen Thermoplasten können andere Temperaturen und andere die Thermofixierung bewirkende Effekte, z. B. Entspannen, zur Anwendung kommen.

Um nach Beendigung des Thermofixierens eine möglichst schnelle Abkühlung zur Erreichung der Formbeständigkeit des Formlings zu erzielen, ist es vorteilhaft, nach erfolgter Thermofixierung die Wandung des Formlings unter geringer Vergrößerung ihres Durchmessers in eine die Wandung außenseitig umgebende Fläche zur Anlage zu bringen, die die Wandung des Formlings abkühlt. Die zum Zwecke der Kühlung erforderliche geringe Durchmesservergrößerung des Formlings kann durch inneren Überdruck bewirkt werden.

Im einzelnen können der Thermofixiervorgang und die damit gegebenenfalls verbundene Durchmesservergrößerung der Wandung des Formlings zum Zwecke der Orientierung des die Wandung bildenden Kunststoffes in der Weise durchgeführt werden, daß der vor-aufgeweitete Formling zunächst zwischen einem axial verschiebbaren Haltedorn, der durch die Öffnung des Formlings in diesen bis zur Anlage an dessen Boden eingeführt wird, und einem axial verschiebbaren Bodendorn zentriert und gehalten wird, der bis zur Anlage an der Außenseite des Bodens in Richtung auf den Formling verschoben wird, worauf eine den Bodendorn umgebende Stützhülse, deren Innendurchmesser etwa dem Außendurchmesser des Formlings im nicht vor-aufgeweiteten Bereich desselben entspricht, nach oben in eine Position bis kurz unterhalb des vor-aufgeweiteten Endbereiches des Formlings geschoben wird und ein die Stützhülse umgebender erster Spannring nach obenverschoben wird, um das vor-aufgeweitete freie Ende des Formlings zwischen erstem Spannring und einem zweiten Spannring, der den von oben in den Formling eingeführten Haltedorn umgibt, einzuklemmen, worauf ein hohler Temperierdorn, der koaxial zum Haltedorn diesen umgebend angeordnet ist, durch eine Relativbewegung gegenüber dem Formling durch dessen Öffnung mit seinem Außenmantel an der Innenfläche zur thermofixierenden Wandung des Formlings anliegend in den von den Klemmringen gehaltenen Formling eingeschoben wird und gleichzeitig die Stützhülse im wesentlichen synchron mit der Abwärtsbewegung des Temperierdorns nach unten verschoben wird, bis letzterer seine dem Boden des Formlings zugekehrte Endlage erreicht hat, worauf eine koaxial zur Stützhülse und zum Bodendorn angeordnete Kühlhülse, deren Innendurchmesser geringfügig größer ist als der Außendurchmesser des durch den Temperierdorn erwärmten und wenigstens geringfügig aufgeweiteten Formlings, über den Formling geschoben und daraufhin Druckluft in den Formling eingeführt wird, so daß die Wandung des Formlings vom Temperierdorn abgehoben und seine äußere Mantelfläche gegen die innere Mantelfläche der Kühlhülse gepresst und soweit abgekühlt wird, daß er eine ausreichende Formstabilität erhält.

Die durch die Klemmittel bewirkte Klemmung des Formlings an seinem das offene Ende umgebenden Rand wird vorteilhaft aufgehoben, nachdem der Temperierdorn seine für den Temperiervorgang erforderliche Endlage erreicht hat, so daß der mit dem Klemmittel zusammenwirkende vor-aufgeweitete Rand des Formlings unter der Einwirkung der Umgebungswärme eine Formänderung erfährt und danach eine Lage einnimmt, in welcher dieser Randbereich parallel zur Längsachse des Formlings verläuft. Die dazu erforderliche Zeit ist nicht länger als die Zeit, die für den Temperiervorgang erforderlich ist. Der Vorteil dieser erneuten Formänderung des Endbereiches, bei welcher letzterer normalerweise in seine Ausgangslage - bei gegebenenfalls vergrößertem Durchmesser - zurückschrumpft, besteht darin, daß der Formling am Ende der Behandlungsschritte eine Gestalt aufweist, bei welcher keinerlei Bereiche der Wandung gegenüber dem Hauptwandbereich nach außen beispielsweise in Form eines Flansches vorstehen. Dies erleichtert den Transport der Formlinge, der ebenfalls der Tatsache Rechnung tragen muß, daß es sich bei den Formlingen um in sehr großen Stückzahlen herzustellende und zu bearbeitende Artikel handelt, die demzufolge auch in großen Stückzahlen zu transportieren sind.

Es ist zweckmäßig, die Kühlhülse erst dann über den Formling zu schieben, wenn der Thermofixiervorgang im wesentlichen beendet ist. Da die Kühlhülse eine merklich tiefere Temperatur aufweist als der Temperierdorn, würde das Vorhandensein der Hülse bereits während des Temperiervorganges die Erwärmung des Formlings auf die zur Erzielung der Thermostabilität erforderlichen Temperaturen verzögern mit der Folge, daß die Durchsatzleistung der zur Durchführung des Verfahrens benutzten Vorrichtung entsprechend kleiner wird.

Die durch das Druckmedium bewirkte Aufweitung des Formlings, die dessen innere Mantelfläche vom Temperierdorn abhebt und dessen äußere Mantelfläche zur Anlage an der inneren Mantelfläche der Kühlhülse bringt, kann so gering sein, daß keine besonderen Maßnahmen getroffen zu werden brauchen, um den Raum, in welchem der Innendruck wirksam ist, nach außen abzuschließen, solange der Temperierdorn in die Öffnung des Formlings hineinragt. Vielmehr ist der Strömungswiderstand im Ringspalt zwischen Mantelfläche des Temperierdorns und innerer Mantelfläche des an der Kühlhülse anliegenden Formlings so groß, daß in jedem Fall ein ausreichender Überdruck aufrechterhalten bleibt, solange das Druckmedium zugeführt wird. Es ist zweckmäßig, den Temperierdorn aus dem Formling herauszuziehen, nachdem die Wandung des letzteren unter der Einwirkung des inneren Überdrucks an der inneren Mantelfläche der Kühlhülse zur Anlage gekommen ist. Dadurch wird der Kühlprozeß beschleunigt, da auch kein Wärmeübergang mehr durch Strahlung vom Dorn auf den Formling erfolgt. Dabei wird jedoch zweckmäßig so verfahren, daß der Temperierdorn zunächst eine Zwischenposition verschoben wird, in welcher lediglich das Ende des Dorns soweit in den Formling hineinragt, daß für die restliche Dauer des Kühlvorganges durch den vorerwähnten Strömungswiderstand der innere Überdruck im Formling aufrechterhalten bleibt. Nach ausreichender Abkühlung des Formlings wird dann die Kühlhülse in eine vom Formling entfernte Position verschoben, so daß sie den Formling freigibt und dieser von einer außenseitig an ihn angreifenden Halterung erfaßt wird, worauf der Bodendorn vom Formling zurückbewegt und auch der Haltedorn aus dem Formling herausgezogen wird. Gleichzeitig damit kann auch der Temperierdorn noch um die Wegstrecke vom Formling wegbewegt werden, die notwendig ist, um außer Eingriff mit dem Formling zu kommen.

Wenn der Formling durch den Temperierdorn mechanisch so stark aufgeweitet wird, daß die Vergrößerung des Umfangs des Formlings zu einer Orientierung des davon betroffenen Kunststoffmaterials führt, wird es im allgemeinen erforderlich sein, daß der Haltedorn vor dem durch das Einführen des Temperierdorns bewirkten Aufweiten des Formlings eine kurze Wegstrecke vom Boden des Formlings wegbewegt wird, die mindestens der Wegstrecke entspricht, um die der Formling eine Verkürzung aufgrund der durch den Temperierdorn bewirkten Vergrößerung seines Durchmessers erfährt. Dabei kann es auch zweckmäßig sein, den Bodenstempel vor dem durch das Einführen des Temperierdorns bewirkten Aufweiten des Formlings oder im Zuge dieses Aufweitvorganges vom Boden des Formlings um eine Wegstrecke zu entfernen, die mindestens dem Ausmaß einer zeitweiligen elastischen Verlängerung des Formlings entspricht. Diese Maßnahme trägt der Tatsache Rechnung, daß beim Aufweiten des Formlings erhebliche Kräfte vom Temperierdorn auf die Formlingswandung übertragen werden, die zunächst dazu führen, daß das die Formlingswandung bildende Material elastisch gedehnt wird, welche Tatsache zu einer gewissen axialen Verlängerung des Formlings führt. Dabei handelt es sich jedoch im wesentlichen um eine elastische Verformung, die sich aufhebt, sobald der Temperierdorn seine Endlage erreicht hat, in welcher im allgemeinen seine Stirnfläche am Boden des Formlings anliegt. Eine ggf. in der Wandung des Formlings verbleibende Spannung würde dann ohnehin unter der Einwirkung des Temperiervorganges aufgehoben werden.

Nach Beendigung des Aufweitvorganges und vorteilhaft während des Temperiervorganges können Haltedorn und Bodendorn wieder zur Anlage am Boden des Formlings derart gebracht werden, daß sie den Boden des Formlings zwischen sich einklemmen und somit den Formling in seiner Position sichern, bis der Formling nach Beendigung des Kühlvorganges von einer Halterung, beispielsweise der Halterung einer Transporteinrichtung erfaßt wird, die den Formling weitertransportiert. Das Erfassen des Bodens durch Haltedorn und Bodendorn trägt der Tatsache Rechnung, daß der Boden normalerweise der formstabilste Teil des Formlings ist, da er eine größere Dicke aufweist als die Wandung. Außerdem hat ein Angreifen von Haltedorn und Bodendorn am Boden des Formlings den Vorteil, daß dies bereits zu einem Zeitpunkt geschehen kann, zu welchem die Wandung des Formlings noch irgendwelchen Behandlungen, beispielsweise dem Kühlvorgang, unterzogen wird, ohne daß die beiden Maßnahmen einander behindern.

Die zur Durchführung des vorbeschriebenen Verfahrens verwendete Vorrichtung ist zum Vor-Aufweiten des Endbereichs des Formlings mit einem beheizbaren, zu seinem freien Ende hin konisch sich verjüngenden Dorn versehen, dessen kleinster Querschnitt kleiner ist als der Querschnitt des Endbereichs des Formlings in nicht vor-aufgeweitetem Zustand, und dessen größter Durchmesser größer ist als der Querschnitt des vor-aufzuweitenden Endbereichs, wobei der das Vor-Aufweiten tewirkende Abschnitt des Dorns durch eine Fläche begrenzt ist, die im Längsschnitt linear oder konkav verläuft. Das letztgenannte Merkmal berücksichtigt die Tatsache, daß der durch den konischen Dorn vor-aufzuweitende Formling im allgemeinen sehr dünnwandig sein wird. Die Dicke der Wandung kann im Bereich von einigen Zehntel Millimetern liegen. Insbesondere eine im Längsschnitt konkave Begrenzung des das Vor-Aufweiten bewirkenden Abschnitts des Dorns verhindert irgendwelche unregelmäßigen Verformungen, insbesondere die Bildung von Falten oder dgl.

Für den Zentriervorgang beim Einführen des konischen Dornes in den Formling, durch welchen der Formling zum Dorn ausgerichtet wird, ist es hingegen vorteilhaft, daß zwischen dem Abschnitt des konischen Dornes, der das Aufweiten des Formlings bewirkt, und dem freien Ende des Dornes letzterer mit einem Abschnitt versehen ist, dessen äußere Begrenzungswandung im Längsschnitt leicht konvex verläuft. Duch diese Ausgestaltung wird erreicht, daß der Formling, der während des Vor-Aufweitens außenseitig keine besondere Abstützung zu erfahren braucht, beim Einführen des Dornes in die Öffnung des Formlings bereits relativ frühzeitig zum konische Dorn ausgerichtet, also zentriert wird.

In der Zeichnung ist als Ausführungsbeispiel der Erfindung eine Vorrichtung zum Herstellen von Dosen dargestellt. Es zeigen:
- Fig. 1: im Schema die Seitenansicht einer Vorrichtung, die mehrere in gleicher Weise ausgebildete Stationen zur Behandlung von Kunststofformlingen aufweist,
- Fig. 2: im Schema die perspektivische Ansicht eines Gehäuses der Vorrichtung gemäß Fig. 1 ohne zusätzliche Teile,
- Fig. 3: im Schema die perspektivische Ansicht einer Kurventrommel für den Antrieb zumindest eines Teils der Behandlungsmittel,
- Fig. 4: eine Ansicht in Richtung der Pfeile II-II der Fig. 1,
- Fig. 5: im Schema die Ansicht einer aus zwei Behandlungsstationen bestehenden Behandlungseinheit in Richtung des Pfeiles II-II der Fig. 1,
- Fig. 6: im Schema die Seitenansicht einer Behandlungsstation zum Vor-Aufweiten eines Formlings mit dem Vor-Aufweitwerkzeug in Ausgangsstellung,
- Fig. 7: eine der Fig. 6 entsprechende Darstellung mit dem Vor-Aufweitwerkzeug in Endstellung,
- Fig. 8: eine den Fig. 5. 7. und 19 entsprechende Darstellung des Formlings nach Durchführung des Vor-Aufweitvorgangs,
- Fig. 9: einen Ausschnitt aus Fig. 7 in größerem Maßstab,
- Fig. 10: im Schema die Seitenansicht einer Behandlungsstation zum Thermofixieren des vor-aufgeweiteten Formlings,
- Fig. 11 bis 17: jeweils eine der Fig. 8 entsprechende Darstellung, wobei die mit dem Formling zusammenwirkenden Behandlungsmittel jeweils Positionen einnehmen, die sich aus dem Ablauf der in dieser Behandlungsstation erfolgenden Behandungen ergeben,
- Fig. 15a und 15b: die jeweils einen Ausschnitt aus Fig. 15 in wesentlich vergrößtertem Maßstab vor bzw. nach dem Aufweiten der Formlings durch inneren Überdruck,
- Fig. 18: die Seitenansicht eines Formlings vor Durchführung der Behandlungsschritte gemäß der Erfindung,
- Fig. 19: die Seitenansicht des vor-aufgeweiteten Formlings,
- Fig. 20: die Seitenansicht des thermofixierten und zum Zwecke der Orientierung des die Wandung bildenden Kunststoffmaterials aufgeweiteten Formlings nach Durchführung der Behandlungsschritte, die Gegenstand der Erfindung sind.

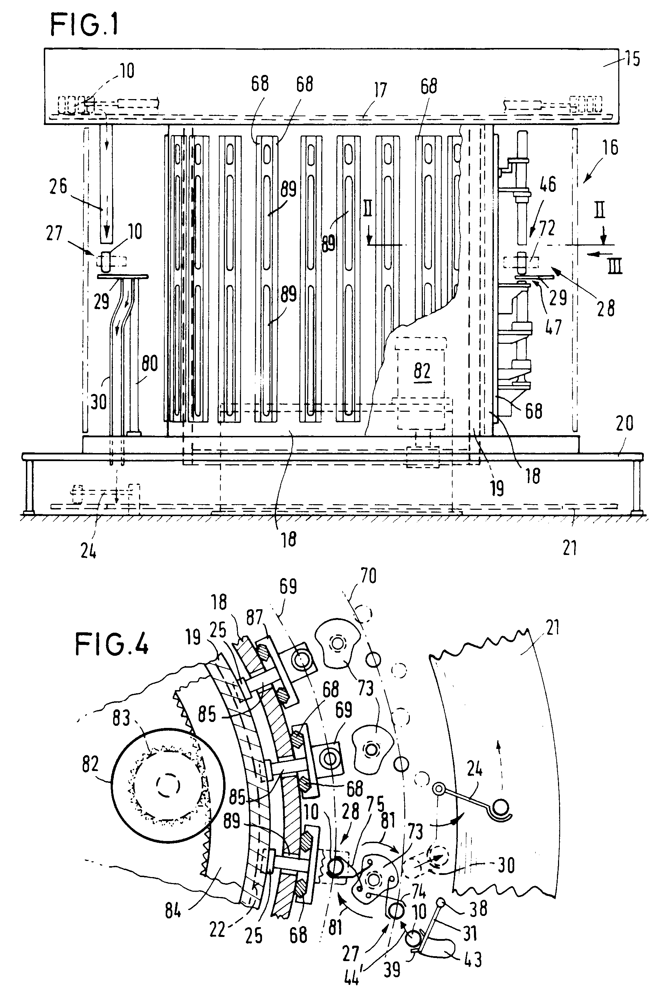

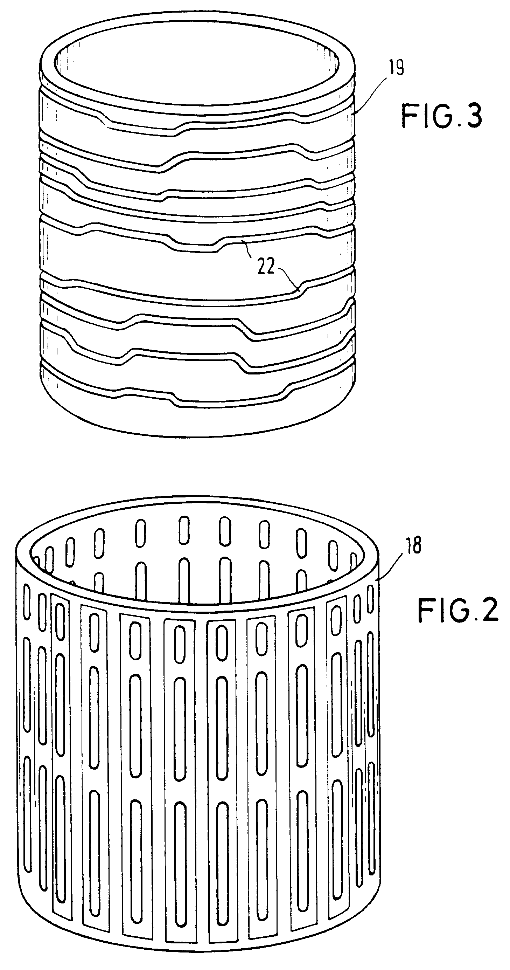

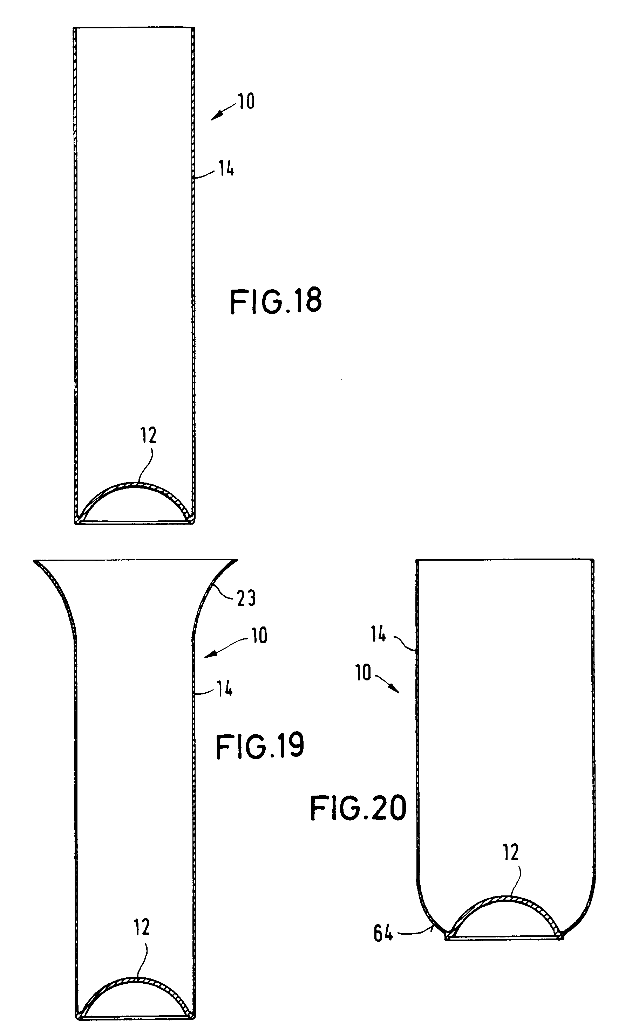

Die in der in Fig. 1 dargestellten Vorrichtung 16 zu behandelnden Formlinge weisen bei dem im folgenden beschriebenen Ausführungsbeispiel die in Fig. 18 der Zeichnung dargestellte Gestalt auf. Jeder Formling 10 besteht im wesentlichen aus einem nach innen eingezogenen, kalottenförmigen Boden 12 und einer zylindrischen Wandung 14, deren oberes, freies Ende eine Öffnung begrenzt. Er kann als Zwischenerzeugnis aus einem Vorformling unter Anwendung eines Ziehvorganges hergestellt worden sein, wie er beispielsweise in der FR-A-25 67 066 beschrieben wird. Die Wandung des Formlings 10 weist nach diesem Ziehvorgang eine Stärke von beispielsweise von 0,1 bis 0,3 mm auf. Der Boden 12 des Formlings ist merklich dicker, da er durch den auf die Wandung 14 beschränkten Ziehvorgang nicht beeinflußt worden ist. Der Ziehvorgang wird im allgemeinen bei einer Temperatur des Vorformlings bzw. der Wandung desselben durchgeführt, die unterhalb der Glasumwandlungstemperatur des thermoplatischen Materials liegt. Die Wandung 14 eines in der vorbeschriebenen Weise hergestellten Formlings 10 ist durch den Ziehvorgang in axialer Richtung orientiert.

Eine Orientierung des Materials in Umfangsrichtung liegt bei dem durch die vorbeschriebene Verfahrensweise hergestellten Formling 10 noch nicht vor.

Zur weiteren Behandlung unter Anwendung der Lehre gemäß der Erfindung werden diese Formlinge 10 über eine geeignete Fördereinrichtung der Vorrichtung 16 zugeführt, die in ihrem oberen Bereich 15 eine in horizontaler Ebene angeordnete Ringscheibe 17 aufweist. Letztere ist um eine vertikale Achse rotierbar. Die Formlinge 10 gelangen zunächst auf diese rotierende Ringscheibe 17, durch die sie über den gesamten Umfang der Vorrichtung 16 verteilt werden. Diese weist unterhalb des oberen Bereiches 15 ein im wesentlichen zylindrisches oder im Querschnitt vieleckiges Gehäuse 18 (Fig. 2) auf, das koaxial zur Rotationsachse der Ringscheibe 17 angeordnet ist. Das Gehäuse 18 ist unterseitig von einer etwa kreisförmigen Basis 20 umgeben, in der eine zweite Ringscheibe 21 koaxial zur oberen Ringscheibe 17 und dem stationären Gehäuse 18 umläuft.

Innerhalb des Gehäuses 18 ist zur Betätigung wenigstens eines Teils der Behandlungsmittel eine Kurventrommel 19 koaxial angeordnet, die um ihre Längsachse rotiert und außenseitig mehrere Kurven 22 trägt. Letztere wirken mit Kurvenrollen 25 zusammen, die mit dem Behandlungsmitel verbunden sind.

Die Behandlungsstationen zur Behandlung der Formlinge sind außenseitig um das stationäre Gehäuse 18 angeordnet. Die Anzahl der Behandlungsstationen hängt von deren Platzbedarf sowie vom Durchmesser des Gehäuses 18 ab.

Jeweils zwei Behandlungsstationen 27, 28, die von jedem Formling 10 zwecks Durchführung der an ihm vorzunehmenden Behandlungsschritte durchlaufen werden, sind zu jeweils einr Behandlungseinheit zusammengefaßt. Alle Behandlungseinheiten der Vorrichtung 16 sind in gleicher Weise ausgebildet, so daß in allen Behandlungseinheiten der Vorrichtung 16 die Formlinge in gleicher Weise behandelt werden. Aus Gründen der Übersichtlichkeit sind in Fig. 1 links nur eine Behandlungsstation 27 und rechts nur eine Behandlungsstation 28 schematisch dargestellt. Tatsächlich sind diese Stationen, wie sich insbesondere aus Fig. 4 ergibt, jeweils paarweise angeordnet.

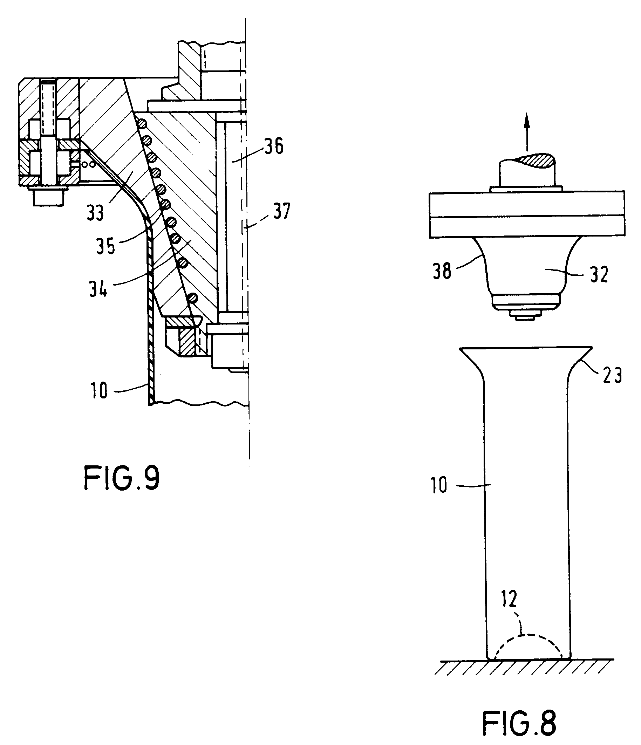

Die einzelnen Formlinge 10 gelangen von der oberen Ringscheibe 17 in einem im wesentlichen vertikal verlaufenden Schacht 26, dessen Innendurchmesser dem Außendurchmesser des Formlings 10 angepaßt ist. Der Schacht 26, durch den der Formling 10 nach unten fällt, endet etwa auf halber Höhe des Gehäuses 18 seitlich neben der ersten Behandlungsstation 27 der aus zwei Behandlungsstationen 27, 28 bestehenden Behandlungseinheit. Aus dem Schacht 26 wird der Formling in die erste Behandlungsstation 27 verschoben, in der er vor-aufgeweitet wird. Nach Beendigung des Vor-Aufweitens weist der Formling 10 die in den Fig.9 und 19 dargestellte Gestalt auf. Sein oberer Endbereich 23 ist kelchartig aufgeweitet. Aus der Behandlungsstation 27 wird der Formling 10 dann in die daneben befindliche zweite Behandlungsstation 28 gebracht, in welcher er einer weiteren Behandlung unterzogen wird, bei der es sich bei dem im folgenden beschriebenen Ausführungsbeispiel um einen mechanischen Aufweitvorgang handelt, an den sich ein Thermofixiervorgang anschließt, durch den der aufgeweitete Formling thermostabil gemacht wird. Beim mechanischen Aufweitvorgang wird die Wandung 14 des Formlings, ausgehend von dem vor-aufgeweiteten Endbereich 23, auf einen merklich größeren Durchmesser gebracht, um das die Wandung 14 bildende Material, abgesehen vielleicht vom äußersten Rand des vor-aufgeweiteten Bereichs 23, in Umfangsrichtung zu orientieren.

Nach Durchführung der Behandlungen in der zweiten Behandlungsstation 28 weist der Formling 10 die in Fig. 20 dargestellte Gestalt auf. Der Boden 12 ist unverändert geblieben. Der Wandbereich 14 hat eine merkliche Aufweitung erfahren, die auch zu einer Verkürzung des Formlings führt.

Der so hergestellte Artikel, bei dem es sich um ein Zwischenerzeugnis, aber auch um das Enderzeugnis handeln kann, wird aus der zweiten Behandlungsstation 28 wiederum durch eine im wesentlichen horizontale Transportbewegung über die obere Öffnung eines zweiten Förderschachtes 30 transportiert und dann freigegeben, so daß er durch den Schacht 30 nach unten in den Bereich der unteren Ringscheibe 21 fällt, wobei ein Schieber oder dgl. 24 vorgesehen ist, um den unterhalb des unteren Schachtes 30 befindlichen Formling auf die untere Ringscheibe 21 zu verschieben, durch die er auf eine anschließende Fördereinrichtung gebracht wird, die das in der Vorrichtung 16 hergestellte Erzeugnis einer nächsten Behandlungsstation oder z. B. einem Sammelbehälter zuführt.

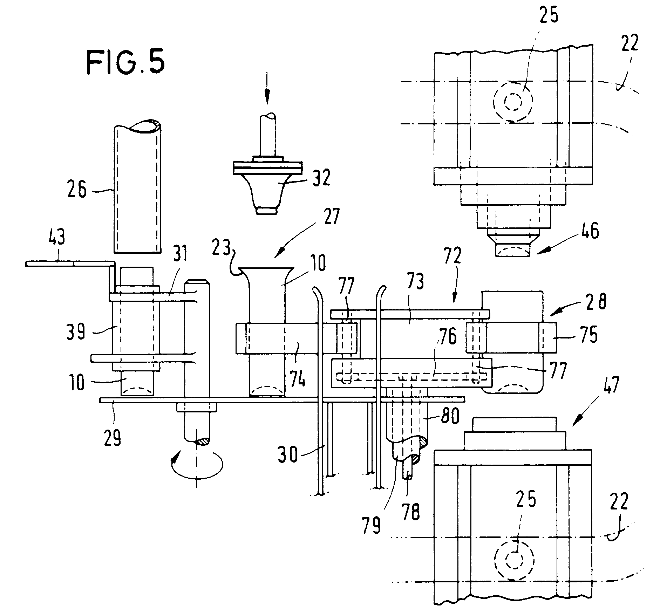

Insbesondere Fig. 5 läßt erkennen, daß der obere Förderschacht 26 jeder Behandlungseinheit neben der ersten Behandlungsstation 27 mündet, und zwar an der der zweiten Behandlungsstation 28 abgekehrten Seite der ersten Behandlungsstation 27. Unterhalb des freien Ende des Förderschachtes 26 in einem Abstand von diesem, der etwas größer ist als der jeweiligen maximalen Längserstreckung des Formlings 10 entspricht, ist eine Bodenplatte 29 angeordnet. Zwischen dem Bereich unterhalb des Förderschachtes 26 und der ersten Behandlungsstation 27 ist ein Transportarm 31 um eine vertikale Achse 38 (Fig. 4) hin- und herschwenkbar angeordnet. An diesem Transportarm 31 ist nahe dessen freiem Ende eine Aufnahme 39 angebracht, die an einer Seite offen und im übrigen der jeweiligen Querschnittsform des Formlings angepaßt ist. Weiterhin ist der Schwenkarm 31 mit einem im wesentlichen in horizontaler Ebene verlaufenden Fortsatz 43 versehen, der in einem geringen vertikalen Abstand vom unteren Ende des Schachtes 26 verläuft. Der Transportarm 31 ist zwischen zwei Endstellungen hin- und herschwenkbar, von denen jene in den Fig. 4 und 5 dargestellt it, in welcher sich die Aufnahme 39 für den Formling 10 unterhalb des Schachtes 26 mit diesem fluchtend befindet, so daß ein aus dem Schacht 26 nach unten sich bewegender Formling beim Auftreffen auf der Bodenplatte 29 sich zwangsläufig in der Aufnahme 39 befindet. In die andere Endlage wird der Transportarm 31 in Richtung des Pfeiles 44 verschwenkt. Diese Endlage entspricht der Axialposition des Formlings in der ersten Behandlungsstation 27. Im Zuge der Verschwenkung in Richtung des Pfeiles 44 wird der Fortsatz 43 in eine Position verschwenkt, in der sich sein der Halterung 39 abgekehrter Endbereich kurz unterhalb des unteren Endes des Schachtes 26 befindet, so daß bei in der ersten Behandlungsstation 27 befindlicher Halterung des Transportarmes 31 ein durch den Schacht 26 nach unten fallender Formling zunächst auf den Fortsatz 43 trifft, der entsprechend der vom Transportarm 31 ausgeführten Schwenkbewegung und dem Radius des Schwenkarms 31 leicht gebogen ausgebildet ist. Im Zuge der Rückbewegung des Transportarmes 31 in seine linke, in den Figuren 4 und 5 dargestellte Endlage, wird der Fortsatz 43 in der letzten Phase dieser Rückbewegung aus dem Bereich unterhalb des Schachtes 26 wegbewegt so daß der vom Fortsatz 43 getragene Formling, der an der Bewegung des Fortsatzes 43 nicht teilnehmen kann, da er sich mit dem größten Teil seiner Längserstreckung noch im Schacht 26 befindet, nach unten auf die Bodenplatte 57 und in die Halterung 39 fällt und bei der nächsten Schwenkbewegung des Tansportarms 31 in Richtung des Pfeiles 44 in die erste Behandlungsstation 27 verschoben werden.

Insbesondere die Figuren 4 und 5 lassen erkennen, daß die beide Stationen 27, 28 jeder Behandlungseinheit relativ zum Gehäuse 18 unterschiedlich positioniert sind. Die jeweils zweiten Stationen 28 aller Behandlungseinheiten sind zumindest derart direkt mit dem Gehäuse verbunden, daß die Führungsleisten 68 für die Werkzeuge am Gehäuse befestigt sind, so daß letzteres auch die Reaktionskräfte aufnimmt, die aus den Kräften resultieren, die in den jeweils zweiten Behandlungsstationen 28 durch die Werkzeuge zur Bearbeitung der Formlinge aufgebracht werden. Die jeweils ersten Stationen 27 aller Behandlungseinheiten sind den jeweils zugehörigen zweiten Behandlungsstationen 28 gegenüber etwas nach außen versetzt, so daß sie einen größeren radialen Abstand von der Längsachse des Gehäuses 18 aufweisen als die jeweils zweiten Stationen 28. Dabei ist die Anordnung so getroffen, daß alle ersten Stationen 27 einerseits und alle zweiten Stationen 28 andererseits auf jeweils einem gemeinsamen, zum Gehäuse 18 koaxialen Kreis 69 bzw. 70 angeordnet sind und der Kreis 70, auf welchem die jeweils ersten Stationen 27 liegen, einen größeren Durchmesser aufweist als der Kreis 69, auf dem die zweiten Stationen 28 aller Behandlungseinheiten liegen. Die vorbeschriebene Anordnung erlaubt es, eine größere Anzahl von Stationen pro Gehäuse vorzuziehen als bei Anordnung beider Stationen einer Behandlungseinheit unmittelbar am Gehäuse 18, also beispielsweise auf dem Kreis 69 der Fig. 4. Im übrigen wird durch die vorbeschriebene relative Anordnung bei den Stationen 27 und 28 einer Behandlungseinheit zueinander auch der Transport innerhalb der Behandlungseinheit von einer Station zur anderen erleichtert, da er nicht entlang dem Umfang des Gehäuses 18 zu erfolgen braucht, wodurch hinsichtlich der Transportmittel und der Transportwege eine größere Flexibilität erreicht wird.

So ist jeder jeweils aus den Behandlungsstationen 27 und 28 bestehenden Behandlungseinheit ein Transporteinrichtung 72 zugeordnet, welches aus einem um eine vertikale Achse schwenkbaren Block 73 besteht, an welchem zwei Greifer 74 und 75 angebracht sind, deren beiden Teile zur Durchführung der Schließ- und Öffnunsbewegungen ebenfalls in horizontaler Ebene schwenkbar am Block 73 angebracht sind. Der Antrieb für die Öffnungs- und Schließbewegungen wird über Verbindungselemente 76, 77 auf die Greiferteile übertragen. Der Antrieb für die Schwenkbewegung des Blocks 73 erfolgt über ein zum Verbindungselement 78 koaxiales Rohrstück 79, welches mit dem Block 73 fest verbunden ist. Beide Verbindungsglieder 78 und 79 sind in geeigneter Weise mit jeweils einer Kurve 22 der Kurventrommel 19 verbunden.

Die beiden Verbindungsglieder 78, 79 sind von einem zu ihnen koaxialen, stationären Rohrabschnitt 80 umgeben, der, wie auch Fig. 1 erkennen läßt, sich auf der Basis 20 der Vorrichtung abstützt. Dieser Rohrabschnitt 80 trägt die Bodenplatte 29 und ggf. weitere in der jeweils ersten Station befindliche Teile. Bei der in den Figuren 4 und 5 dargestellten Position der Teile befinden sich der Greifer 74 in der ersten Behandlungsstation 27 und der Greifer 75 in der zweiten Behandlungsstation 28.

In der ersten Behandlungsstation 27 ist ein in den Fig. 1 und 4 nicht dargestellter auf- und abbewegbarer Dorn 32 (Fig. 5- 9) angeordnet, mittels dessen der obere Endbereich 23 des Formlings 10 vor-aufgeweitet wird, so daß der Formling 10 die z. B. in den Fig. 8 und 19 dargestellte Gestalt erhält. Der Dorn 32 besteht im wesentlichen aus einem äußeren Mantel 33 und einem inneren Kern 34. Beide Teile sind koaxial zueinander angeordnet. Der Kern 34 ist außenseitig mit spiralförmig umlaufenden Nuten versehen, in welche ein Draht 35 eingelegt ist, der als elektrischer Heizwiderstand zur Erwärmung des Mantels 33 dient. Ein Kern 34 und Mantel 33 tragender axialer Bolzen 36 ist mit einem zentralen, längsverlaufenden Kanal 37 versehen, durch welchen während des in der Station 27 durchzuführenden Formgebungsvorganges Druckluft in den Formling 10 eingeführt wird, um innerhalb desselben einen Überdruck zu erzeugen, der die Wandung des Formlings 10 abstützt.

Der zu seinem freien Ende hin sich verjüngende Dorn 32 ist in dem Bereich seiner äußeren Begrenzungsfläche, die bei der Formgebung des Endbereiches 23 des Formlings 10 mit der Wandung des letzteren in Berührung kommt, im Längsschnitt konkav ausgebildet.

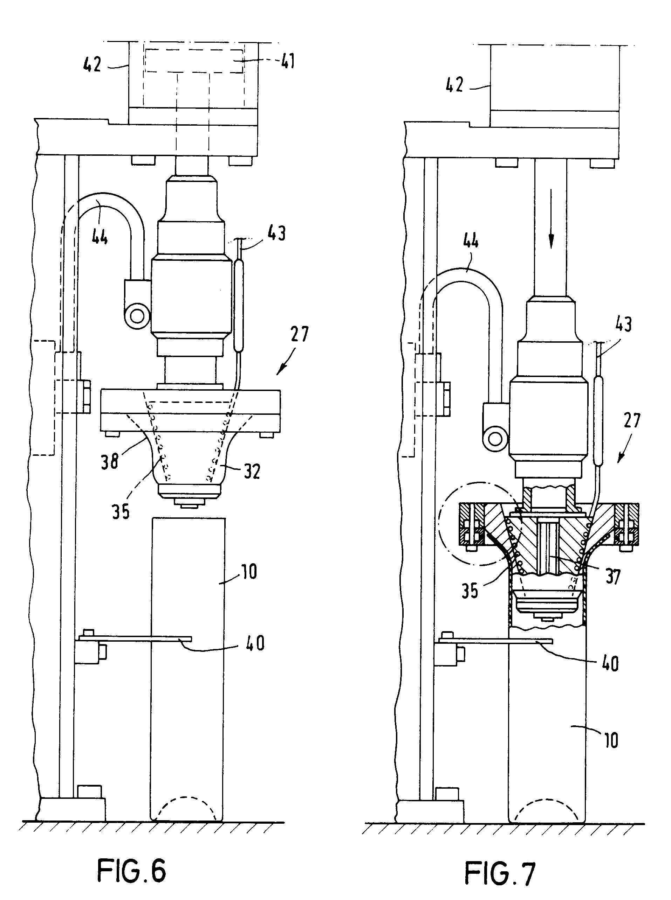

Der durch den oberen Schacht 26 und danach durch den Transportarm 31 in die erste Behandlungsstation 27 gelangte Formling 10 wird dort lediglich von einer Gabel 40 zum Dorn 32 ausgerichtet. Letzterer wird dann aus seiner in Fig. 6 dargestellten Ausgangslage nach unten durch die oben befindliche Öffnung des Formlings 10 in letzteren eingeführt. Der Durchmeser des Dorns 32 ist an seinem freien Ende kleiner als der Durchmesser der Öffnung des Formlins 10. Im Verlauf der Absenkbewegung des Dornes 32 erfolgt zunächst eine Feinausrichtung des Formlings 10, so daß dieser genau koaxial zum Dorn 32 angeordnet ist. Im Verlauf dieses Ausrichtens in der ersten Phase der Abwärtsbewegung des Dorns 32 werden kaum axiale Kräfte auf den Formling 10 einwirken, der, wie bereits erwähnt, sehr dünnwandig ist. Im Verlauf des weiteren Absenkvorganges kommt dann der konkave Bereich 38 mit dem oberen Endbereich 23 des Formlings in Berührung. Da der Dorn 32 durch den elektrischen Widerstand 35 auf eine für die Erweichung des thermoplastischen Materials geeignete Temperatur erwärmt ist, wird auch das thermoplastische Material, sobald es mit dem Dorn 32 in Berührung kommt, eine entsprechende Erwärmung erfahren. Dies führt zu einer Erweichung des Materials im Endbereich 23, der in diesem Zustand unter Anwendung reltiv geringer Kräfte verformbar ist. Um in jedem Fall sicherzustellen, daß die Bewegung des Dorns 32 nach unten in den Formling 10 hinein und das Ausmaß der Erwärmung des Endbereiches 23 derart aufeinander abgestimmt sind, daß der Dorn 32 nur entsprechend dem Ausmaß der Erwärmung und der damit bewirkten Verformbarkeit des Endbereichs 23 in den Formling vorbewegt wird, ist der Dorn 32 von einem Kolben 41 getragen, der innerhalb eines pneumatischen Zylinders 42 geführt und in Richtung auf den Formling 10 beaufschlagt ist (Fig. 6). Diese Anordnung erlaubt eine genaue Bemessung der auf den zu verformenden Randbereich 23 des Formlinges 10 einwirkenden Kraft, wobei der durch den Kolben 41 übertragene Druck ohne weiteres so eingestellt werden kann, daß die resultierende Kraft einerseits groß genug ist, den erweichten Randbereich des Formlings 10 zu verformen, andererseits zu klein ist, um eine ungewollte Verformung des Formlings 10 insbesondere auch in dessen nicht-erwärmtem Bereich zu verursachen. Dabei spielt die bereits erwähnte Beaufschlagung des vom Formling 10 umschlossenen Innenraums mit der durch den Kanal 37 zugeführten Druckluft eine wesentliche Rolle, da diese eine Stützfunktion hat und insbesondere ein Einknicken des relativ schlanken Formlings 10 unter der Einwirkung der durch den Dorn 32 ausgeübten Kraft vermeidet. Die konkave Form des Bereiches 38 des Dorns 32 ist dabei auch von Bedeutung, da sie im Berührungsbereich zwischen Dorn und zu verformendem Rand 23 Kräfte überträgt, deren radiale Komponente gegenüber der axialen Komponente überwiegt und somit der Aufweitvorgang begünstigt.

Der Anschluß des elektrischen Widerstands 35 an eine Spannungsquelle erfolgt über eine Leitung 43. Die Druckluft wird über eine Schlauchleitung 44 zugeführt.

Wenngleich der Dorn 32 bei seiner Abwärtsbewegung in den Formling 10 zwecks Verformung von dessen Randbereich 23 keinen Zwangsantrieb erfährt, ist der Weg, den der Dorn 32 zum Zwecke der Verformung des Randbereiches 23 ausführt, in geeigneter Weise, z. B. durch einen Anschlag begrenzt. Auf diese Weise ist sichergestellt, daß an jedem Formling 10 die Formgebung des Endbereiches 23 in gleicher Weise erfolgt unter der Voraussetzung, daß die dafür erforderliche Mindestzeit, die im wesentlichen durch die Erweichungsgeschwindigkeit der Wandung des Endbereiches 23 bestimmt wird, zur Verfügung steht.

Nach Beendigung der Behandlung des Formlings 10 in der ersten Behandlungsstation 27 wird der vor-aufgeweitete Formling 10 in die zweite Behandlungsstation 28 gebracht. Zu diesem Zweck wird der Block 73 (Fig. 4 und 5) um die vertikale Achse in Richtung des Pfeiles 81 verschwenkt, nachdem zuvor der Greifer 74 um den in der Station 27 und der Greifer 75 um den in der Station 28 jeweils befindlichen Formling geschlossen worden sind. Im Zuge der Schwenkbewegung in Richtung des Pfeiles 81 wird der vor-aufgeweitete Formling 10 aus der ersten Behandlungsstation 27 in die zweite Behandlungsstation 28 transportiert, wobei gleichzeitig der in der zweiten Behandlungsstation 28 befindliche Formling vom zweiten Greifer 75 in eine Position gebracht wird, in welcher sich dieser Formling dicht oberhalb der oberen Öffnung des unteren Förderschachtes 30 befindet, der aus mehreren, Abstände voneinander aufweisenden Stäben oder Drähten gebildet ist. Nach Erreichen der jeweiligen Endposition werden beide Greifer 74 und 75 geöffnet, so daß der vom Greifer 74 gehaltene Formling in der Behandlungsstation 28 und der vom Greifer 75 gehaltene Formling oberhalb des unteren Förderschachtes 30 freigegeben werden. Bei dieser Position der Teile wird zugleich der Transportarm 31 unter Mitnahme eines in der Halterung 39 befindlichen nächsten Formlings in die rechte Endposition verschwenkt. Somit finden nach Rückbewegung entgegen der Richtung des Pfeiles 81 in die in den Figuren 4 und 5 dargestellte Ausgangsposition der Greifer 74 den nächsten Formling in der Bearbeitungsstation 27 und der Greifer 75 den nächsten Formling in der Bearbeitungsstation 28 vor. Im allgemeinen wird so vorgegangen, daß beide Greifer 74 und 75 erst geschlossen werden, nachdem die Behandlungsvorgänge in den beiden Stationen 27 und 28 an den Formlingen beendet sind.

Die in der Behandlungsstation 27 vorgesehene besondere Halterung 40 in Form einer Gabel ist zweckmäßig so ausgebildet, daß die in Fig. 6 hinter dem Formling 10 liegende Zinke kürzer ist als die dem Betrachter zugekehrte Zinke, so daß der Formling 10 ohne Schwierigkeiten durch den Greifer in die Halterung 40 eingeschoben und wieder aus ihr herausgeführt werden kann.

Die Behandlung des Formlings in der zweiten Behandlungsstation 28 erfolgt gleichzeitig mit der Behandlung des folgenden Formlings in der ersten Behandlungsstation 27.

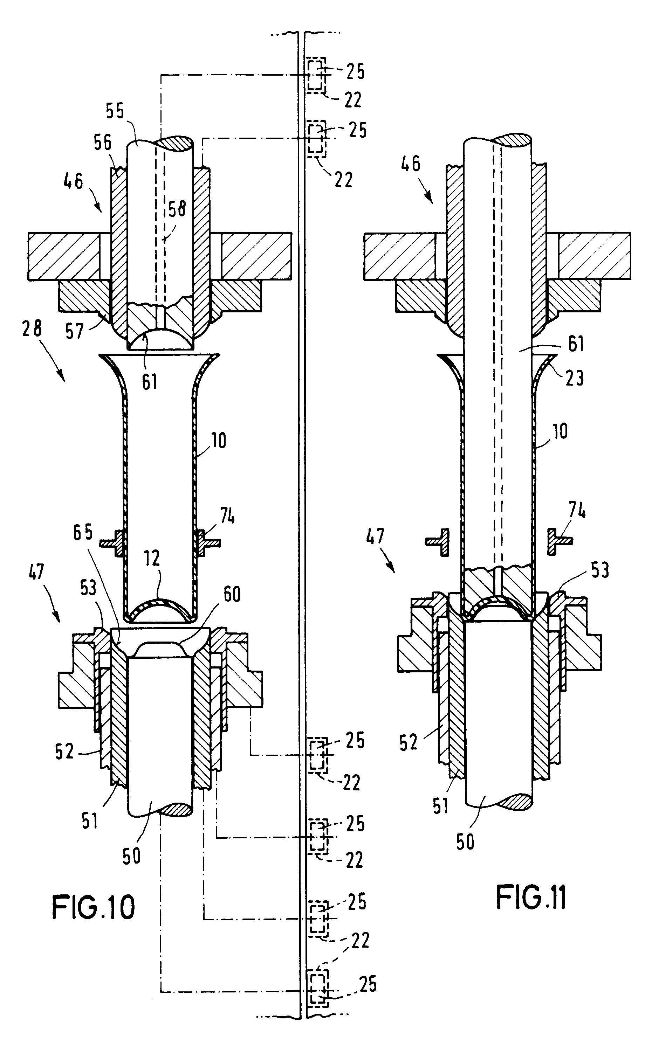

In der Station 28 befinden sich zwei Gruppen von Mitteln zur Durchführung von Behandlungen am Formling 10. Alle Mittel der oberen Gruppe 46 befinden sich in ihrer in Fig. 10 dargestellten Ausgangslage oberhalb des oberen, vor-aufgeweiteten Endes des Formlings 10. Alle Behandlungsmittel der unteren Gruppe 47 befinden sich in ihrer in Fig.10 dargestellten Ausgangslage der die Mittel bildenden Teile unterhalb des Formlings 10, der zu diesem Zeitpunkt noch vom Greifer 74 der Transporteinrichtung 72 gehalten wird.

Die untere Gruppe 47 von Behandlungsmitteln weist einen Bodendorn 50, eine diesen umgebende Stützhülse 51, eine letztere umgebende Kühlhülse 52 sowie einen die Kühlhülse 52 umgebenden bewegbaren Spannring 53 auf. Alle diese Teile sind unabhängig voneinander axial verschiebbar angebracht.

Die obere Gruppe 46 von Behandlungsmitteln weist einen Haltedorn 55, einen diesen umgebenden Temperierdorn 56 sowie einen zweiten, stationären Spannring 57 auf, der den Temperierdorn 56 umgibt. Der Haltedorn 55 ist mit einer axialen Bohrung 58 versehen. Haltedorn 55 und Temperierdorn 56 sind unabhängig voneinander axial verschiebbar angeordnet.

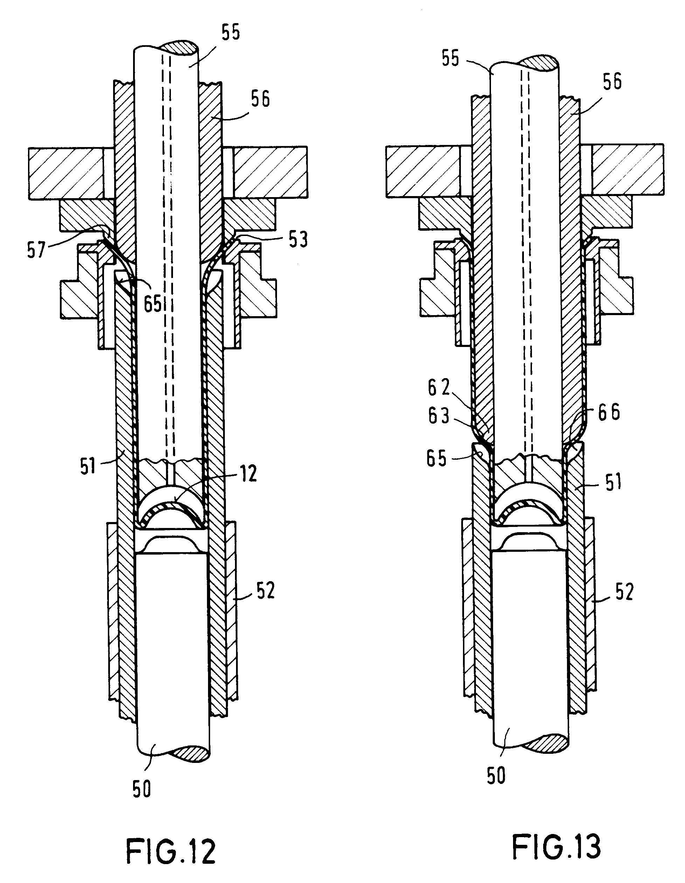

Nachdem der Formling 10 in die in Fig.10 dargestellte Position gebracht worden ist, werden, während der Formling 10 noch vom Greifer 74 gehalten ist, der Bodendorn 50 nach oben bis zur Anlage am eingezogenen Boden 12 des Formlings und der Haltedorn 55 in den Formling 10 hinein verschoben. Die Stirnfläche 60 des Bodendornes 50 ist an die Form des Bodens 12 angepaßt, so daß, wenn der Bodendorn 50 außen am Boden 12 anliegt, ein Formschluß zwischen letzterem und dem Bodendorn 50 vorhanden ist, der den Formling 10 gegen seitliches Verschieben sichert. Der Außendurchmesser des Haltedornes 55 ist nur ganz geringfügig kleiner als der Innendurchmesser des Formlings 10 in seinem nicht vor-aufgeweiteten Bereich, so daß der Haltedorn 55 ohne Schwierigkeiten, insbesondere auch ohne Übertragung von Kräften auf den Formling 10, die zu einer unzulässigen Verformung desselben führen könnten, in den Formling bis zur Anlage am Boden 12 eingeführt werden kann. Die Stirnfläche 61 des Haltedornes 55 ist ebenfalls an die Form des Bodens 59 angepaßt, so daß in der Endposition von Bodendorn 50 und Haltedorn 55 der Boden 12 zwischen den Stirnflächen 60 und 61 der beiden genannten Teile eingeklemmt ist. Da der Boden 12 normalerweise eine merklich größere Dicke und damit eine merklich größere Steifigkeit aufweist als die Wandung des Formlings 10, können Bodendorn 60 und Haltedorn 55 fest zur Anlage am Boden 12 gebracht werden, ohne daß eine unzulässige Verformung desselben zu befürchten ist. Auf diese Weise ist eine eindeutige Positionierung des Formlings 10 durch Bodendorn 50 und Haltedorn 55 gewährleistet. Fig.11 zeigt die Endlage beider Teile 50 und 61 bei bereits geöffnetem Greifer 75.

An der Aufwärtsbewegung des Bodendorns 50 bis zur Anlage am Boden 12 des Formlings 10 nehmen auch die übrigen Teile der unteren Gruppe 47, also die Stützhülse 51, die Kühlhülse 52 und der bewegbare Klemmring 53 teil, so daß diese Mittel als Einheit aus der Lage gemäß Fig. 10 in die der Fig.11 verschoben werden können, wenngleich jedem dieser Mittel ein eigener Antrieb in Form einer Kurvenrolle zugeordnet ist.

Nach Erreichen der Position gemäß Fig. 11 werden Bodendorn 50 und Haltedorn 55 synchron unter gleichzeitiger Mitnahme des Formlings 10 nach oben bewegt, bis der freie Rand des vor-aufgeweiteten Endbereichs 23 zur Anlage am oberen stationären Spannring 57 kommt. Alsdann wird der untere, bewegliche Klemmring 53 nach oben bis zur Anlage an dem freien Rand des vor-aufgeweiteten Endbereichs 23 geschoben, so daß dieser Rand zwischen den beiden Spannringen 57 und 53 eingeklemmt wird. Diese Lage der Teile ist in den Fig. 12 und 13 dargestellt. Gleichzeitig oder kurz danach wird die Stützhülse 51 nach oben verschoben, deren Innendurchmesser dem Außendurchmesser des Formlings 10 in dessen nicht vor-aufgeweitetem Bereich entspricht. Die obere Endlage der Stützhülse 51 ist in Fig. 12 dargestellt. Sie befindet sich in einem kurzen Abstand vom unteren Ende des in Fig. 12 noch seine obere Ausgangslage einnehmenden Temperierdorns 56, dessen freies Ende in den vor-aufgeweiteten Endbereich des Formlings 10 hineinragt, nachdem dieser durch die vorerwähnte gemeinsame Aufwärtsbewegung von Bodendorn 50 und Haltedorn 55 nach oben in eine Position verschoben worden war.

Im folgende Arbeitsschritt wird der Temperierdorn, dessen Außendurchmesser bei dem in der Zeichnung dargestellten Ausführungsbeispiel merklich größer ist als der Innendurchmesser des Formlings 10 in dessen nicht vor-aufgeweitetem Bereich, in den Formling 10 eingeführt, wobei gleichzeitig die den Formling 10 außen umgebende Stützhülse 51, und zwar vorteilhaft mit derselben Geschwindigkeit, nach unten zurückbewegt wird. Dabei ist von Bedeutung, daß der untere Endabschnitt des Temperierdorns 56 zu seinem Ende hin sich verjüngend ausgebildet ist derart, daß dieser Endabschnitt 62 außenseitig durch eine Fläche 63 begrenzt wird, die den Übergang 64 zwischen Boden 12 und Wandung 14 des fertigen Hohlkörpers (Fig. 20) formt. Das Stirnende der Stützhülse 51 ist von einer konkaven Fläche 65 begrenzt derart, daß die Stirnfläche 65 eine Art trichterförmige Führung für die unter der Einwirkung des in den Formling 10 eindringenden Temperierdornes 56 sich erweiternden Formlingswandung 14 bildet. Insbesondere Fig. 13 läßt erkennen, daß während des Aufweitvorganges, also während der im wesentlichen synchron ablaufenden Bewegung von Temperierdorn 56 und Stützhülse 51 von oben nach unten, die abgerundete Begrenzungsfläche 63 am Ende des Temperierdornes 56 einerseits und die trichterförmig sich erweiternde Fläche 65 einen schmalen Spalt 66 begrenzen, der jenen Bereich der Formlingswandung 14 aufnimmt, der jeweils im Zuge der Bewegung von Temperierdorn 56 und Stützhülse 51 dem Aufweitvorgang unterliegt. Der Spalt 66 ist einerseits groß genug, um zu verhindern, daß der jeweils dem Aufweitvorgang unterliegende Wandabschnitt zwischen dem Endabschnitt 62 des Temperierdorns 56 und der Stirnfläche 65 der Stützhülse 61 eingeklemmt ist, andererseits jedoch so eng, daß der jeweils dem Aufweitvorgang unterliegende Wandabschnitt des Formlings 10 eine gewisse Führung erfährt. Insbesondere wird durch die mit dem Temperierdorn 56 synchrone Abwärtsbewegung der Stützhülse 51 verhindert, daß jener Abschnitt der Wandung 14 des Formlings 10 unter der Einwirkung des Temperierdorns sich unkontrolliert aufzuweiten beginnt, der jeweils noch zwischen dem Endabschnitt 62 des Temperierdorns 56 und dem Boden 12 des Formlings 10 liegt. D. h., daß der Aufweitvorgang über die gesamte Länge des Formlings in gleicher Weise und kontrolliert abläuft.

Vor Beginn des Aufweitvorganges sind Haltedorn 55 sowie Bodendorn 50 jeweils um eine geringe Wegstrecke axial vom Boden 12 des Formlings 10 wegbewegt worden. Das Abheben des Haltedorns 55 vom Boden 12 trägt der Tatsache Rechnung, daß der Formling 10 im Verlauf des folgenden Aufweitvorgangs durch das Einführen des Temperierdorns 56 eine gewisse Verkürzungerfahren kann. Das Wegbewegen des Bodendornes 50 geschieht in Anbetracht der Tatsache, daß das Einführen des Temperierdornes 56 in den Formling 10 insbesondere in der Anfangsphase zu einer geringen Längung des Formlings 10 aufgrund der durch den Temperierdorn 56 auf den Formling übertragenen axialen Kräfte führt. Diese axiale elastische Dehnung wird jedenfalls in der Anfangsphase des Aufweitvorganges noch nicht durch eine entsprechendeaxiale Verkürzung aufgrund der Durchmesservergrößerung der Wandung 14 im Übergangsbereich 64 zum Boden 12 kompensiert.

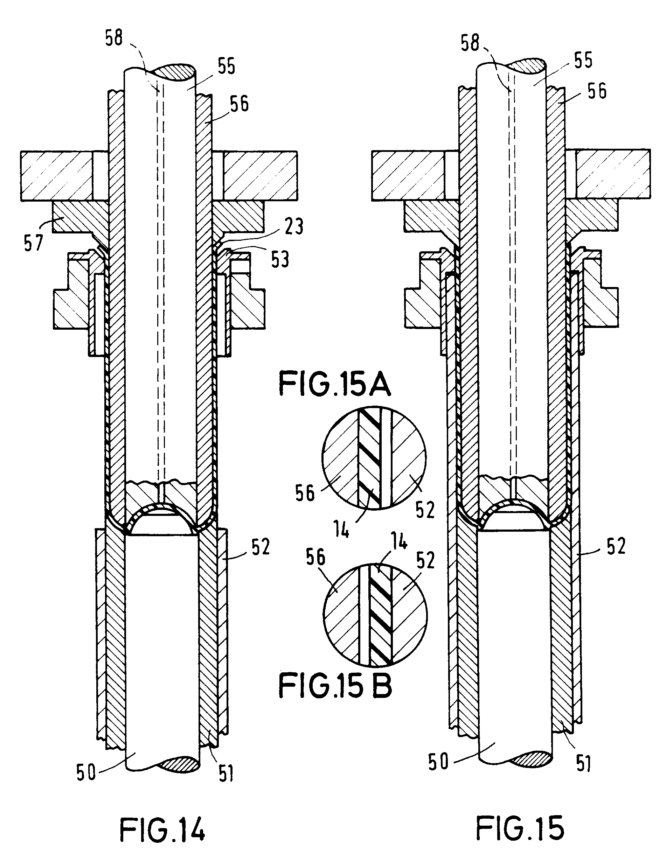

Fig. 14 zeigt die Lage der Teile nach Beendigung des Aufweitvorganges. Der Formling 10 weist, abgesehen von seinem eingespannten Rand, die in Fig. 20 dargestellte Gestalt auf. Der Boden 12 ist durch den Aufweitvorgang unbeeinflußt geblieben. An den Boden schließt sich der bereits erwähnte Bereich 64 an, der den Übergang zwischen Boden 12 und dem größten Teil der Wandung 14 bildet, die parallel zur Längsachse des Hohlkörpers verläuft. Im Übergangsbereich 64 hat der Formling eine Aufweitung erfahren, deren Ausmaß entsprechend dem abnehmenden Durchmesser zum Boden 12 geringer wird.

Der Aufweitvorgang, der bei einer Temperatur des Formlings 10 erfolgt, die jedenfalls unterhalb der Temperatur liegt, in welcher das den Formling bildende Material eine Plastifizierung erfährt, bewirkt eine molekulare Orientierung der Wandung 14 des Formlings in Umfangsrichtung mit einer entsprechenden Verbesserung der mechanischen Eigenschaften des die Wandung bildenden Materials, insbesondere bezüglich seiner Zugfestigkeit in Umfangsrichtung. Dieses Orientieren des Materials hat jedoch auch zur Folge, daß es schrumpft, also eine Dimensionsverringerung, beispielsweise eine Verringerung des Umfangs und damit des Durchmessers erfährt, wenn das orientierte Material wieder auf eine bestimmte Temperatur erwärmt wird. Aus diesem Grunde ist es erforderlich, den auf die vorbeschriebene Weise hergestellten Hohlkörper zu thermofixieren, d. h., einer thermischen Behandlung bei einer bestimmten Temperatur zu unterziehen, die dazu dient, den Hohlkörper zu stabilisieren mit dem Ergebnis, daß bei späterer Wärmeeinwirkung bei einer Temperatur, die unterhalb der Temperatur liegt, bei welcher die Thermofixierung stattgefunden hat, der Hohlkörper keine nennenswerte Schrumpfung erfährt. D. h., daß die für den Thermofixiervorgang benutzte Temperatur so gewählt werden muß, daß sie höher liegt als die Temperatur, die bei normaler Handhabung der auf die vorbeschriebene Weise hergestellte Hohlkörper später ausgesetzt wird. Beispielsweise bei PETP wird eine derartige Thermofixierung dadurch erzielt, daß eine zumindest teilweise Kristallisation des Materials durch die Wärmebehandlung herbeigeführt wird.

In Fig. 14 ist die Lage des Temperierdornes 56 nach Beendigung des Aufweitvorganges dargestellt. In dieser Lage verbleibt der Temperierdorn 56 für eine Zeitspanne, die für die gewünschte Thermofixierung erforderlich ist. Zugleich werden Haltedorn 55 und Bodendorn 50 wieder zur Anlage am Boden 12 des aufgeweitete Formlings gebracht. Ferner wird nach Beendigung des Aufweitvorganges der bewegbare Spannring 53 um eine kurze Wegstrecke verschoben, so daß der Rand des Formlings freigegeben ist. Aufgrund der inneren Spannung im Bereich des eingeklemmt gewesenen Randes 23 und aufgrund seiner Temperatur erfährt dieser eine Rückorientierung bis auf den Durchmesser des Temperierdorns, so daß der Rand 23 wieder von unten sich achsparallel am Temperierdorn 56 anlegt, wobei ggf. auch gleichzeitig eine axiale Verkürzung eintreten kann. Der resultierende Hohlörper weist somit eine Form entsprechend Fig. 20 auf. Nach Beendigung des Thermofixiervorgangs wird die Kühlhülse aus ihrer in Fig. 14 dargestellten Ausgangslage nach oben verschoben bis in die Lage der Fig. 15, in welcher der Formling über seine gesamte Längserstreckung, abgesehen von seinem oberen Rand, von der Kühlhülse 52 umgeben ist. Nachdem die Kühlhülse 52 ihre obere Endlage erreicht hat, wird durch den axialen Kanal 58 des Haltedornes 55 Druckluft in den thermofixierten Formling gegeben, so daß letzterer etwas aufgeweitet und mit seiner äußeren Mantelfläche an die innere Mantelfläche der Kühlhülse 52 zur Anlage kommt. In Fig. 15A ist die Lage der Teile vor der Beaufschlagung und in Fig. 15B nach der Beaufschlagung des Formlings 10 mit Druckluft dargestellt. Insbesondere Fig. 15A läßt erkennen, daß der Außendurchmesser des von der Druckluft noch nicht beaufschlagten Formlings geringfügig kleiner ist als der Innendurchmesser der Kühlhülse 52. Dieser Durchmesserunterschied ist jedoch sehr gering und lediglich groß genug, um einerseits die Kühlhülse bei ihrer Bewegung nach oben ohne Schwierigkeiten über den Formling schieben zu können und andererseits ein einwandfreies Abhebender Wandung 14 des Formlings von der Mantelfläche des Temperierdorns 56 unter dem Einfluß des durch die Druckluft bewirkten inneren Überdrucks zu gewährleisten. Die Zufuhr der Druckluft und das dadurch bewirkte Abheben der Wandung 14 des Formlings vom Temperierdorn 56 und Anlegen der äußeren Mantelfläche der Wandung 14 an der inneren Mantelfläche der Kühlhülse 52 erfolgt zu einem Zeitpunkt, der so gewählt ist, daß die Dauer des vorausgegangenen Kontakts zwischen Temperierdorn 56 und Formling lang genug war, um die angestrebte Thermofixierung des die Wandung des Formlings bildenden Materials zu gewährleisten.

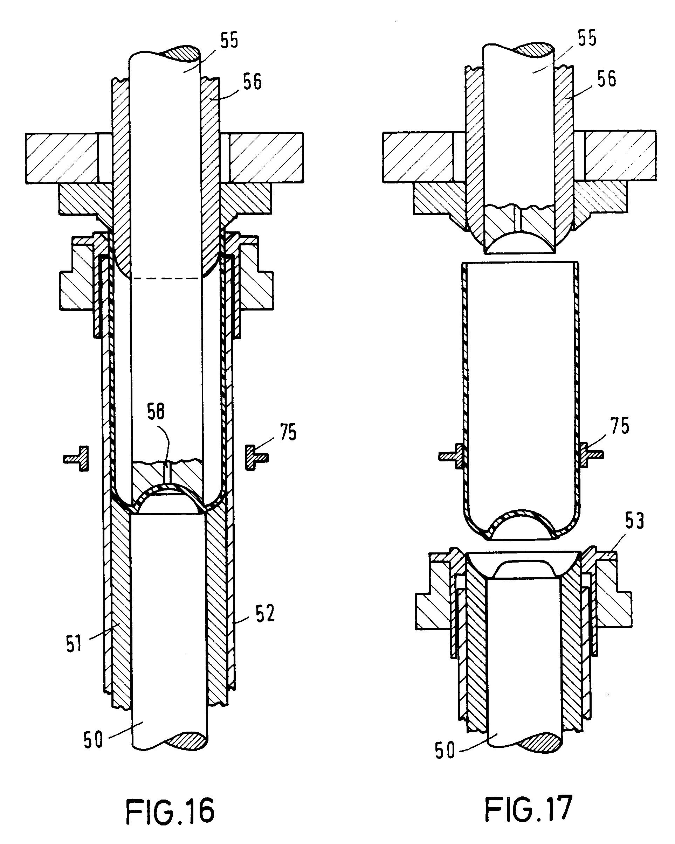

Vorteilhaft unmittelbar nach dem Aufweiten des Formlings 10, durch welches seine Wandung 14 vom Temperierdorn 56 abgehoben wird, wird letzterer aus dem Formling 10 herausbewegt. Diese Bewegung wird unterbrochen, wenn der Temperierdorn 56 etwa die in Fig. 16 der Zeichnung dargestellte Position erreicht hat, in welcher er noch in das obere Ende des Formlings hineinragt. Durch das Entfernen des Temperierdorns wird ein weiterer Wärmeübergang vom Temperierdorn auf den Formling vermieden.

In der in Fig. 16 dargestellten Zwischenlage hat der Temperierdorn 56 die Funktion eines Absperrorgans, welches den Innenraum des Formlings nach außen soweit abschließt, daß der Innendruck im Formling ausreicht, um diesen gegen die Kühlhülse 52 zu pressen. Zwar befindet sich zwischen der Mantelfläche des Temperierdornes 56 und der inneren Mantelfläche der Wandung des Formlings ein schmaler Ringspalt, dessen radiale Abmessung jedoch so klein ist, daß der dadurch bewirkte Strömungswiderstand zur Aufrechterhaltung des erforderlichen Innendrucks im Formling ausreicht. Nach ausreichender Abkühlung des Formlings durch die durch den Kanal 58 zugeführte Druckluft und den Wärmeübergang vom Formling auf die Kühlhülse 52 wird der Temperierdorn 56 vollständig aus dem Formling herausgezogen, bis er die Lage gemäß Fig. 17 einnimmt.

Es wird im allgemeinen nicht erforderlich sein, die Kühlhülse besonders zu kühlen, z. B. durch Hindurchleiten eines Kühlmittels durch ein innerhalb der Kühlhülse angebrachtes Kanalsystem, da die erforderliche Kühlleistung, also die von der Kühlhülse aufzunehmende Wärme pro Kühlvorgang, aufgrund der geringen Wandstärke des Formlings nicht sehr groß ist. Im Bedarfsfall ist es natürlich möglich, die Kühlhülse 52 zu kühlen. Dies kann auch in der Weise geschehen, daß sie in ihrer Ausgangsposition gemäß Fig. 8 einer besonderen Kühlung, z. B. durch Anblasen mit Luft, unterzogen wird.

Die Kühlung nach der Thermofixierung hat zur Folge, daß die davon betroffenen warmen Bereiche des Formlings eine Temperaturerniedrigung erfahren, die eine Formstabilität bewirkt. Die Temperatur nach der Kühlung kann immer noch merklich über der Umgebungstemperatur, also im allgemeinen der Raumtemperatur, liegen.

Gleichzeitig mit dem endgültigen Herausbewegen des Temperierdornes 56 aus dem Formling werden auch Kühlhülse 51 und unterer Klemmring 53 soweit nach unten verschoben, daß sie den Formling freigeben. Alsdann kann der Greifer 75 um den Formling geschlossen werden. Danach werden Bodendorn 50 und Haltedorn 55 vom Formling wegbewegt bzw. aus dem Formling herausgezogen, so daß dieser vom Greifer 75 durch eine Schwenkbewegung der Transporteinrichtung 72 aus der Behandlungsstation 28 heraus und zum Transportschacht 30 transportiert werden kann.

Aufgrund der Tatsache, daß die Bewegungen der einzelnen Behandlungselemente in der Station 28 über die Kurvenrollen 25 von der Kurventrommel 19 abgeleitet werden (Fig. 4 und 10), erfolgt für alle Elemente eine Zwangsantrieb, so daß in jedem Fall die richtige zeitliche und räumliche Zuordnung der einzelnen Behandlungselemente zueinander und zum zu behandelnden Formling gewährleistet ist. Dies gilt z. B. auch für die innerhalb der Behandlungseinheit befindliche Transporteinrichtung 72.

Die Kurventrommel 19 wird durch einen Motor 82 angetrieben, auf dessen Welle, ggf. unter Zwischenschaltung eines Getriebes, ein Zahnrad 83 sitzt, welches mit einem Zahnkranz 84 kämmt, der an einem nach innen vorstehenden Flansch der Kurventrommel 19 angebracht ist.

In den Figuren 1 und 4 ist aufgrund des kleinen Maßstabes darauf verzichtet worden, die Bearbeitungsstationen 27 und 28, insbesondere die darin befindlichen Werkzeuge und sonstigen Behandlungsmittel, im Detail darzustellen. Entsprechendes gilt auch für Fig. 5. Bezüglich der Ausgestaltung der einzelnen Werkzeuge und der anderen Behandlungsmittel und Transporteinrichtungen wird auf die Figuren 6 - 17 verwiesen.

In Fig. 10 ist die Verbindung zwischen Kurvenrolle 25 und zugehörigem Werkzeug oder sonstigem Behandlungsmittel lediglich durch strichpunktierte Linien angedeutet. Konstruktiv kann die Anordnung gemäß der Darstellung der Fig. 4 so getroffen sein, daß jede Kurvenrolle 25 über einen Verbindungsbolzen 85 mit einem das zugehörige Behandlungsmittel tragenden Schlitten 87 verbunden ist, der an den Führungsleisten 68 geführt ist. Das die Kurventrommel 19 außenseitig umgebende Gehäuse 18 ist mit Längsschlitzen 89 versehen, durch die die Verbindungsbolzen 85 zwischen Kurvenrolle 25 und zugehörigem Schlitten 87 hindurchragen.

Der Bereich 23 des Formlings 10, der voraufgeweitet worden war, wird normalerweise vor Weiterbehandlung oder endgültiger Verwendung des Formlings abgetrennt, um den Formling auf eine bestimmte Länge zu bringen. Somit spielt auch die Tatsache keine Rolle, daß der die Behandlungsstation 28 verlassende Formling unter Umständen an seinem freien Ende Wandbereiche aufweist, die unterschiedliche Behandlungen erfahren haben und somit ggf. unterschiedliche mechanische Eigenschaften aufweisen.

## Patentansprüche

1. Verfahren zum Herstellen von Hohlkörpern aus orientiertem thermoplastischem Kunststoff, die mit einem Boden, einer daran anschließenden Wandung und einer Öffnung versehen sind, wobei ein hohler, mit einer im wesentlichen zylindrischen Wandung (14) und einem Boden (12) versehener Formling (10) einer aus mehreren Schritten bestehenden Behandlung unterzogen und wenigstens die Wandung (14) thermofixiert wird, und wobei während der Behandlung der die Öffnung aufweisende Endbereich (23) des Formling (10) voraufgeweitet, das voraufgeweitete Ende durch Klemmittel (53,57) eingeklemmt und danach durch eine Relativbewegung zwischen einem beheizten Temperierdorn (56) und dem Formling (10) in letzteren (10) der an der Wandung des Formlings (10) anliegende Temperierdorn (56) eingeführt wird, durch welchen zumindest die Wandung (14) des Formlings auf die für die Thermofixierung erforderliche Temperatur erwärmt wird, dadurch gekennzeichnet, daß vor einem Einführen des Temperierdorns (56) ein Haltedorn (55) in den Formling (10) eingeführt wird, der den Boden (12) des Formlings zwischen sich und einem Bodendorn (50) fixiert und daß der Temperierdorn (56) hülsenförmig über den Haltedorn (55) geschoben wird und daß die Wandung (14) des Formlings (10) vor einem Einführen des Temperierdorns (56) unterhalb des vor-aufgeweiteten Endbereiches (23) zwischen dem Haltedorn (55) und einer den Bodendorn (50) hülsenförmig umgebenden Stützhülse (51) eingeschlossen wird.

2. Vorrichtung nach Anspruch 1, dadurch gekennzeichnet, daß der Temperierdorn (56) zur Erzielung eines gleichmäßigen Wärmeübergangs vom Temperierdorn auf die Wandung (14) des Formlings (10) einen größeren Außendurchmesser aufweist als dem Innendurchmesser des Formlings entspricht.

3. Verfahren nach Anspruch 1, dadurch gekennzeichnet, daß nach der Thermofixierung die Wandung (14) des Formlings unter geringer Vergrößerung ihres Durchmessers an ein die Wandung außenseitig umgebendes Kühlelement (52) zur Anlage gebracht wird, das die Wandung (14) abkühlt.

4. Verfahren nach Anspruch 1, dadurch gekennzeichnet, daß zum Vor-Aufweiten des Endbereichs (23) des Formlings (10) in dessen Öffnung ein in Richtung auf sein freies Ende sich verjüngender, beheizter Dorn (32) eingeführt wird, der unter der Einwirkung eines in Richtung auf den Formling (10) wirkenden Federmittels (41,42) steht und zum Erweichen des vor-aufzuweitenden Endbereichs (23) eine dafür geeignete Temperatur aufweist, und die durch das Federmittel auf den Dorn (32) ausgeübte Kraft so bemessen ist, daß eine das Vor-Aufweiten des Endbereiches (23) bewirkende Verformung erst bei Erreichen einer bestimmten Temperatur und einer dadurch bewirkten Erweichung des unter der Einwirkung des Dorns (32) stehenden Endbereichs der Wandung eintritt.

5. Verfahren nach Anspruch 4, dadurch gekennzeichnet, daß der vom Dorn (32) während des Vor-Aufweitens des Endbereichs (23) zurückzulegende Weg begrenzt ist.

6. Verfahren nach Anspruch 5, dadurch gekennzeichnet, daß während des Vor-Aufweitens des Endbereichs (23) der Formling (10) mit innerem Überdruck beaufschlagt wird.

7. Verfahren nach einem der Ansprüche 1 bis 6, dadurch gekennzeichnet, daß die nach der Thermofixierung erfolgende Durchmesservergrößerung des Formlings (10) zum Zweck der Abkühlung desselben durch inneren Überdruck erfolgt.

8. Verfahren nach Anspruch 1, dadurch gekennzeichnet, daß das Thermofixieren des Formlings (10) bei einer Temperatur von nicht weniger als 150° C durchgeführt wird und die Einwirkungsdauer der Wärme bei dieser Temperatur so bemessen ist, daß eine zumindest teilweise Kristallisation des thermoplastischen Materials eintritt.

9. Verfahren nach Anspruch 1, dadurch gekennzeichnet, daß nach der Fixierung des Formlings (10) zwischen dem Haltedorn (55) und dem Bodendorn (50) ein zur Stützhülse (51) koaxialer, bewegbarer Klemmring (53) nach oben verschoben wird, um das vor-aufgeweitete freie Ende (23) des Formlings (10) zwischen dem bewegbarem Klemmring (53) und einem zweiten Klemmring (57), der den von oben in den Formling eingeführten Haltedorn (55) umgibt, einzuklemmen, worauf der hohle Temperierdorn (56), der koaxial zum Haltedorn (55) diesem gegenüber axial verschiebbar angeordnet ist, durch die Öffnung in den Formling eingeführt wird, wobei der Außenmantel dieses Temperierdorns (56) an der Innenfläche der zu thermofixierenden Wandung (14) des Formlings anliegend relativ in dem von den Klemmringen (53,57) gehaltenen Formling (10) eingeschoben wird, wobei gleichzeitig die den Bodendorn (50) umgebende Stützhülse (51) im wesentlichen synchron mit der Abwärtsbewegung des Temperierdornes (56) nach unten verschoben wird, bis letzterer (56) seine dem Boden (12) des Formlings (10) zugekehrte Endlage erreicht hat, worauf nach einer zum Thermofixieren des Formlings (10) ausreichenden Verweilzeit des Temperierdorns (56) eine koaxial zur Stützhülse (51) und zum Bodendorn (50) angeordnete Kühlhülse (52), deren Innendurchmesser geringfügig größer ist als der Außendurchmesser des durch den Temperierdorn (56) erwärmten und wenigstens geringfügig aufgeweiteten Formlings (10), über den Formling (10) geschoben und daraufhin Druckluft in den Formling (10) eingeführt wird, so daß die Wandung des Formlings (10) vom Temperierdorn (56) abgehoben und mit seiner äußeren Mantelfläche gegen die Kühlhülse (52) gepreßt und soweit abgekühlt wird, daß er eine ausreichende Formstabilität erhält.

10. Verfahren nach Anspruch 9, dadurch gekennzeichnet, daß der bewegbare Klemmring (53) relativ vom zweiten Klemmring (57) wegbewegt wird, wenn der Temperierdorn (56) seine für den Temperiervorgang erforderliche Endlage erreicht hat.

11. Verfahren nach Anspruch 9, dadurch gekennzeichnet, daß die Kühlhülse (52) erst dann über den Formling (10) geschoben wird, wenn der Thermofixiervorgang beendet ist.

12. Verfahren nach Anspruch 9 dadurch gekennzeichnet, daß das Ausmaß der durch das Druckmedium bewirkten Aufweitung des Formlings (10) so gering ist, daß der innere Überdruck durch den Strömungswiderstand im Ringspalt zwischen Temperierdorn (56) und innerer Begrenzungsfläche des an der Kühlhülse (52) anliegenden Formlings (10) ausreichend groß ist, um die Anlage der Wandung an der Kühlhülse (52) zu gewährleisten.

13. Verfahren nach Anspruch 9, dadurch gekennzeichnet, daß der Temperierdorn (56) zumindest teilweise aus dem Formling (10) herausgezogen wird, nachdem die Wandung (14) desselben unter der Einwirkung des inneren Überdrucks an der Kühlhülse (52) anliegt.

14. Verfahren nach Anspruch 9, dadurch gekennzeichnet, daß nach ausreichender Abkühlung des Formlings (10) die Kühlhülse (52) in eine vom Formling (10) entfernte Position verschoben wird, so daß sie den Formling (10) freigibt und dieser von einer außenseitig an ihm angreifenden Halterung (75) erfaßt wird, worauf der Bodendorn (50) vom Formling (10) zurückbewegt und der Haltedorn (55) aus dem Formling (10) herausgezogen wird.

15. Verfahren nach Anspruch 9, dadurch gekennzeichnet, daß der Temperierdorn (56) mit einem größeren Außendurchmesser versehen ist, als dem Innendurchmesser des nicht vor-aufgeweiteten Wandbereichs des Formlings (10) entspricht und der nicht vor-aufgeweitete Bereich des Formlings (10) zur Orientierung in Umfangsrichtung des ihn bildenden thermoplastischen Materials eine Durchmesservergrößerung erfährt.

16. Verfahren nach Anspruch 15, dadurch gekennzeichnet, daß der Haltedorn (55) vor dem durch das Einführen des Temperierdorns (56) bewirkten Aufweiten des Formlings (10) um eine kurze Wegstrecke vom Boden (12) des Formlings (10) wegbewegt wird, wobei diese Wegstrecke mindestens der Wegstrecke entspricht, um die der Formling (10) eine Verkürzung aufgrund der durch den Temperierdorn (56) bewirkten Vergrößerung seines Durchmessers erfährt.

17. Verfahren nach Anspruch 15, dadurch gekennzeichnet, daß der Bodendorn vor dem durch das Einführen des Temperierdorns (46) bewirkten Aufweiten des Formlings (10) vom Formling (10) um eine Wegstrecke entfernt wird, die mindestens dem Ausmaß einer zeitweiligen elastischen Verlängerung des Formlings (10) entspricht.

18. Verfahren nach Anspruch 9, dadurch gekennzeichnet, daß der Haltedorn (55) und der Bodendorn (50) nach dem Aufweitvorgang und während des Themofixiervorganges wieder am Boden (12) des Formlings (10) zur Anlage gebracht werden, um diesen im Bereich des Bodens (12) zu halten.

19. Verfahren nach Anspruch 1, dadurch gekennzeichnet, daß die Wandung (18) des Formlings (10) zylindrisch ausgebildet wird.

20. Vorrichtung zum Herstellen von Hohlkörpern aus orientiertem thermoplastischen Kunststoff, bei welchem die Wandung eines hohlen, mit einem Boden (12) versehenen Formlings (10) durch einen in den Formling (10) einzuführenden beheizten Temperierdorn (56) thermofixierbar ist, dadurch gekennzeichnet, daß zum Voraufweiten des Endbereichs (23) des Formlings (10) ein in dessen offenes Ende einführbarer, beheizter konischer Dorn (32) vorgesehen ist, der mit seinem in den Formling (10) einzuführenden Endbereich an den Querschnitt des Formlings (10) angepaßt ist und sich zu seinem freien Ende hin verjüngt, wobei der das Aufweiten des Formlings (10) bewirkende Bereich des Dornes (32) durch eine Fläche begrenzt ist, die im Längsschnitt linear oder konkav verläuft, und daß der Temperierdorn (56) hülsenförmig auf einem in den Formling (10) einführbaren Haltedorn (55) geführt ist.

21. Vorrichtung nach Anspruch 20, dadurch gekennzeichnet, daß zwischen dem Bereich des konischen Dorns (32), mit welchem das Aufweiten des Formlings durchgeführt wird, und dem freien Ende des Dornes (32) letzerer mit einem Bereich versehen ist, dessen äußere Begrenzungswandung im Längsschnitt konvex verläuft.

22. Vorrichtung zum Herstellen von Hohlkörpern aus orientiertem thermoplastischem Kunststoff, deren Wandung durch Einführen eines beheizten Temperierdorns (56) thermofixierbar ist, die einen dem bodenseitigen Ende eines Formlings (10) zugeordneten und parallel zur Längsachse des Formlings (10) verschiebbaren Bodendorn (50) mit einer der äußeren Kontur des Bodens an seiner Außenseite im wesentlichen angepaßten Stirnfläche (60) aufweist, dadurch gekennzeichnet, daß der offenen Seite des Formlings (10) ein parallel zur Achse des Formlings (10) verschiebbarer Haltedorn (55), der koaxial zum Haltedorn (55) diesem gegenüber relativ verschiebbare, hohle Temperierdorn (56) sowie ein den Temperierdorn (56) umgebender, zu diesem koaxial angeordneter Klemmring (57) zugeordnet sind, und daß dem bodenseitigen Ende des Formlings (10) zusätzlich eine koaxial zum Bodendorn (50) angeordnete, diesem gegenüber axial längsverschiebbar geführte Stützhülse (51), eine zur Stützhülse (51) koaxiale, diese umgebende und dieser gegenüber relativ verschiebbare Kühlhülse (52) sowie ein koaxial zum Bodendorn (50) angeordneter, diesem gegenüber relativ verschiebbarer Klemmring (53) zugeordnet sind.

23. Vorrichtung nach einem der Ansprüche 20 bis 22, dadurch gekennzeichnet, daß das stirnseitige Ende (62) des Temperierdorns (56) und das stirnseitige Ende (65) der Stützhülse (51) aneinander angepaßt sind.

## Claims

1. A method whereby oriented thermoplastic is used to produce hollow members having a base, an adjacent wall and an opening, a hollow moulding (10) formed with a substantially cylindrical wall (14) and a base (12) being subjected to treatment in a number of steps and at least the wall (14) being heat-set, and during the treatment the end region (23) of the moulding (10), in which the opening is formed, is pre-expanded, and the pre-expanded end is clamped by clamping means (53, 57), after which a heating mandrel (56) abutting the wall of the moulding (10) is inserted into the moulding (10) by relative motion between the moulding (10) and the mandrel (56) with the result that at least the wall (14) of the moulding is heated to the temperature required for heat-setting, characterised in that before the heating mandrel (56) is inserted, a retaining mandrel (55) is inserted into the moulding (10) and secures the base (12) of the moulding between it and a base mandrel (50), and the heating mandrel (56) is slid like a sleeve over the retaining mandrel (55), and before the heating mandrel (56) is inserted, the wall (14) of the moulding (10) under the pre-expanded end region (23) is enclosed between the retaining mandrel (55) and a supporting sleeve (51) which in sleeve-like manner surrounds the base mandrel (50).

2. A device according to claim 1, characterised in that, to obtain uniform heat transfer from the heating mandrel (56) to the wall (14) of the moulding (10), the heating mandrel has an outer diameter greater than the inner diameter of the moulding.

3. A method according to claim 1, characterised in that after heat-setting, the wall (14) of the moulding, with a slight enlargement of its diameter, is brought to abut a cooling element (52) externally surrounding the wall, thus cooling the wall (14).

4. A method according to claim 1, characterised in that in order to pre-expand the end region (23) of the moulding (10), a heated mandrel (32) tapering towards its free end is introduced into the moulding and is acted upon by a spring means (41, 42) acting in the direction towards the moulding (10) and has a temperature sufficient to soften the pre-expanded end region (23), and the force exerted by the spring means on the mandrel (32) is given a value such that deformation for pre-expanding the end region (23) occurs only when a given temperature is reached, with a consequent softening of the end region of the wall acted upon by the mandrel (32).

5. A method according to claim 4, characterized in that the travel of the mandrel (32) during the pre-expansion of the end region (23) is limited.

6. A method according to claim 5, characterised in that during the pre-expansion of the end region (23), the moulding (10) is acted upon by an internal excess pressure.

7. A method according to any of claims 1 to 6, characterised in that the increase in the diameter of the moulding (10) after heat-setting is for the purpose of cooling it through internal excess pressure.

8. A method according to claim 1, characterised in that the moulding (10) is heat-set at a temperature not below 150°C, and the duration of action of heat at this temperature is given a value such that the thermoplastic material is at least partly crystallised.

9. A method according to claim 1, characterised in that after the moulding (10) has been fixed between the retaining mandrel (55) and the base mandrel (50), a clamping ring (53) movable coaxially relative to the supporting sleeve (51) is slid over, in order to clamp the pre-expanded free end (23) of the moulding (10) between the movable clamping ring (53) and a second clamping ring (57) surrounding the retaining mandrel (55) which has been inserted from above into the moulding, after which the hollow heating mandrel (56), which is coaxial and axially movable relative to the retaining mandrel (55), is inserted through the opening into the moulding, the outer surface of the heating mandrel (56) abutting the inner surface of the wall (14) of the moulding for heat-setting and being inserted into the moulding (10) held by the clamping rings (53, 57), and simultaneously the supporting sleeve (51) surrounding the base mandrel (50) is moved downwards, substantially in synchronism with the downward movement of the heating mandrel (56), until the mandrel (56) has reached its end position facing the base (12) of the moulding (10), and after the heating mandrel (56) has remained for a sufficient time for heat-setting the moulding (10), a cooling sleeve disposed coaxially with the supporting sleeve (51) and the base mandrel (50) and having an inner diameter slightly greater than the outer diameter of the moulding (10), which has been heated and at least slightly expanded by the heating mandrel (56), is slid over the moulding (10), after which compressed air is introduced into the moulding (10), so that the wall of the moulding (10) is lifted off the heating mandrel (56) and its outer surface is pressed against the cooling sleeve (52) and cooled until it has sufficient dimensional stability.

10. A method according to claim 9, characterised in that the movable clamping ring (53) is moved away from the second clamping ring (57) when the heating mandrel (56) has reached its end position required for the heating process.

11. A method according to claim 9, characterised in that the cooling sleeve (52) is not slid over the moulding (10) until the heat-setting process comes to an end.

12. A method according to claim 9, characterised in that the extent to which the moulding (10) is expanded by the pressure medium is so small that the inner excess pressure due to the flow resistance in the annular gap between the heating mandrel (56) and the inner boundary surface of the moulding (10) adjacent the cooling sleeve (52) is sufficiently great to ensure that the wall abuts the cooling sleeve (52).

13. A method according to claim 9, characterised in that the heating mandrel (56) is at least partly withdrawn from the moulding (10) after the wall (14) thereof abuts the cooling sleeve (52) under the action of the internal excess pressure.

14. A method according to claim 9, characterised in that after the moulding (10) has been sufficiently cooled, the cooling sleeve (52) is moved into a position remote from the moulding (10), so that it releases the moulding (10) and the moulding is gripped by a retaining ring (75) which externally engages it, whereupon the base mandrel (50) is moved back from the moulding (10) and the retaining mandrel (55) is pulled out of the moulding (10).

15. A method according to claim 9, characterised in that the heating mandrel (56) is given an outer diameter larger than the inner diameter of the not pre-expanded wall region of the moulding (10), and the not pre-expanded region of the moulding (10) is given an increase in diameter, for the purpose of orienting the thermoplastic material forming it in the peripheral direction.

16. A method according to claim 15, characterised in that before the moulding (10) is expanded by inserting the heating mandrel (56), the retaining mandrel (55) is moved a short distance away from the bottom (12) of the moulding (10), the distance being at least equal to the amount by which the moulding (10) is shortened as a result of the increase in its diameter brought about by the heating mandrel (56).

17. A method according to claim 15, characterised in that before the moulding (10) is expanded by inserting the heating mandrel (46), the base mandrel is moved away from the moulding (10) by a distance at least equal to a temporary elastic lengthening of the moulding (10).

18. A method according to claim 9, characterised in that after the expansion process and during the heat-setting process, the retaining mandrel (55) and the base mandrel (50) are again brought to abut the base (12) of the moulding (10), in order to hold it in the region of the base (12).

19. A method according to claim 1, characterised in that the wall (18) of the moulding (10) is cylindrical.

20. A device for producing hollow members from oriented plastics, in which the wall of a hollow moulding (10) provided with a base (12) is heat-set by a heated heating mandrel (56) inserted into the moulding (10), characterized in that a heated conical mandrel (32) is provided for insertion into the open end of the moulding (10), so as to pre-expand the end region (23) thereof, the end region of the mandrel (32) for inserting into the moulding (10) being adapted to the cross-section of the moulding (10) and tapering towards its free end, and the region of the mandrel (32) for expanding the moulding (10) is bounded by a surface which is linear or concave in longitudinal section, and the heating mandrel (56) is guided like a sleeve on the retaining mandrel (55) for inserting into the moulding (10).

21. A device according to claim 20, characterised in that the conical mandrel (32), between its free end and the region thereof for expanding the moulding, is provided with a region having an outer boundary wall which is convex in longitudinal section.

22. A device for using oriented thermoplastic to produce hollow members having a wall which is heat-set by inserting a heated heating mandrel (56), the device comprising a base mandrel (50) associated with the bottom end of a moulding (10) and movable parallel to the longitudinal axis of the moulding (10) and having an end face (60), the outside of which substantially matches the outer contour of the base, characterised in that the open side of the moulding (10) is associated with a retaining mandrel (55) movable parallel to the axis of the moulding (10), the hollow heating mandrel (56) coaxial with and movable relative to the retaining mandrel (55), and a clamping ring (57) disposed coaxially with and surrounding the heating mandrel (56), and the bottom end of the moulding (10) is additionally associated with a supporting sleeve (51) disposed coaxially with the base mandrel (50) and longitudinally movable axially relative to it, a cooling sleeve (52) disposed coaxially with the supporting sleeve (51) and surrounding it and movable relative to it, and a clamping ring (53) disposed coaxially with the base mandrel (50) and movable relative to it.

23. A device according to any of claims 20 to 22, characterised in that the facing end (62) of the heating mandrel (56) and the facing end (65) of the supporting sleeve (51) are matched to one another.

## Revendications

1. Procédé pour fabriquer des corps creux en matière thermoplastique orientée ayant un fond, une paroi rattachée à celui-ci, et une ouverture, à partir d'une ébauche de moulage creuse (10) pourvue d'une paroi sensiblement cylindrique (14) et d'un fond (12), que l'on soumet à un traitement en plusieurs phases et dont on durcit ainsi à chaud au moins la paroi (14), l'extrémité (23) de l'ébauche où se trouve l'ouverture subissant un élargissement préalable au cours de ce traitement, cette extrémité préalablement élargie étant saisie par des moyens de serrage (53,57), après quoi, grâce à un mouvement relatif entre l'ébauche (10) et un mandrin de cuisson (56) qui est chauffé, on introduit dans l'ébauche ce mandrin de cuisson (56) en appui sur la paroi de l'ébauche (10) pour amener au moins la paroi (14) de l'ébauche à la température nécessaire pour le durcissement à chaud, caractérisé en ce que, avant d'introduire le mandrin de cuisson (56), on introduit dans l'ébauche (10) un mandrin de maintien (55) pour fixer le fond (12) de l'ébauche (10) entre celui-ci et un mandrin de fond (50), en ce qu'on fait alors coulisser par-dessus le mandrin de maintien (55) le mandrin de cuisson (56) qui a la forme d'une douille, et en ce que la paroi (14) de l'ébauche (10), avant l'introduction du mandrin de cuisson (56), se trouve prise en dessous de la zone préalablement élargie (23) entre le mandrin de maintien (55) et une douille d'appui (51) qui entoure le mandrin de fond (50).

2. Dispositif selon la revendication 1, caractérisé en ce que le mandrin de cuisson (56) présente un diamètre externe supérieur au diamètre interne de l'ébauche de moulage (10), afin d'assurer une transmission régulière de la chaleur du mandrin de cuisson (56) à la paroi (14) de l'ébauche (10).

3. Procédé selon la revendication 1, caractérisé en ce que, après le durcissement par la chaleur de la paroi (14) de l'ébauche (10), qui s'accompagne d'une légère augmentation du diamètre de cette paroi, on applique celle-ci contre un élément de refroidissement (52) qui entoure extérieurement la paroi (14) et la refroidit.

4. Procédé selon la revendication 1, caractérisé en ce que, pour assurer l'élargissement préalable de l'extrémité (23) de l'ébauche (10), on introduit dans l'ouverture de celle-ci un mandrin chauffé (32) qui va en s'amincissant en direction de son extrémité libre et qui est soumis à l'effet d'un organe élastique (41,42) agissant en direction de l'ébauche (10), et présente une température appropriée pour ramollir l'extrémité (23) qui doit subir l'élargissement préalable, l'effort exercé sur le mandrin (32) par l'organe élastique étant calculé pour assurer une déformation de l'extrémité en vue de son élargissement préalable seulement lorsqu'une température déterminée se trouve atteinte et que se produit de ce fait un ramollissement de l'extrémité de la paroi soumise à l'action du mandrin (32).

5. Procédé selon la revendication 4, caractérisé en ce qu'on limite la course du mandrin (32) pendant l'élargissement préalable de la partie terminale (23).

6. Procédé selon la revendication 5, caractérisé en ce qu'on soumet l'ébauche de moulage (10) à un effet de surpression interne pendant l'élargissement préalable de son extrémité (23).

7. Procédé selon l'une des revendications 1 à 6, caractérisé en ce qu'on provoque par un effet de surpression interne l'augmentation de diamètre de l'ébauche (10) faisant suite au durcissement par la chaleur, afin d'assurer le refroidissement de l'ébauche.

8. Procédé selon la revendication 1, caractérisé en ce qu'on effectue le durcissement à chaud de l'ébauche (10) à une température d'au moins 150° C, et en ce qu'on ménage la durée de l'effet de la chaleur à cette température pour obtenir une cristallisation au moins partielle de la matière thermoplastique.

9. Procédé selon la revendication 1, caractérisé en ce que, après avoir fixé l'ébauche (10) entre le mandrin de maintien (55) et le mandrin de fond (50), on fait coulisser vers le haut une bague de serrage mobile (53) coaxiale à la douille d'appui (51), pour maintenir par serrage l'extrémité préalablement élargie (23) de l'ébauche (10) entre cette bague de serrage mobile (53) et une deuxième bague de serrage (57) qui entoure par le haut le mandrin de maintien (55) introduit dans l'ébauche, après quoi on introduit dans l'ébauche par l'ouverture de celle-ci le mandrin de cuisson creux (56) coaxial au mandrin de maintien (55) et monté à coulisse sur celui-ci dans le sens axial, la face externe de la paroi du mandrin de cuisson (56) étant ainsi amenée par un mouvement coulissant relatif au contact de la face interne de la paroi (14) qu'il s'agit de durcir par chauffage dans l'ébauche de moulage (10) qui est maintenue par les bagues de serrage (53,57), puis on fait descendre en même temps la douille d'appui (51) qui entoure le mandrin de fond (50), en un mouvement de coulissement sensiblement synchronisé avec la descente du mandrin de cuisson (56) jusqu'au moment où ce dernier arrive dans sa position extrême en regard du fond (12) de l'ébauche (10), et ensuite après un délai de présence du mandrin de cuisson (56) suffisant pour assurer le durcissement à chaud de l'ébauche (10), on met en place par coulissement sur l'ébauche de moulage (10) un mandrin de refroidissement (52) coaxial à la douille d'appui (51) et au mandrin de fond (50), ce mandrin de refroidissement ayant un diamètre interne légèrement supérieur au diamètre externe de l'ébauche (10) échauffée par le mandrin de cuisson et au moins légèrement élargie de ce fait, après quoi on envoie de l'air comprimé dans l'ébauche (10), afin d'écarter du mandrin de cuisson (56) la paroi de l'ébauche, et d'en mettre la face externe en appui contre le mandrin de refroidissement (52) pour la refroidir jusqu'à obtenir une stabilité de forme suffisante.

10. Procédé selon la revendication 9, caractérisé en ce que l'on déplace la bague de serrage mobile (53) par rapport à la deuxième bague de serrage (57) pour l'écarter de cette dernière lorsque le mandrin de cuisson (56) est parvenu dans sa position extrême nécessaire pour l'opération de cuisson.

11. Procédé selon la revendication 9, caractérisé en ce qu'on fait coulisser la douille de refroidissement (52) sur l'ébauche de moulage (10) seulement lorsque l'opération de cuisson est terminée.

12. Procédé selon la revendication 9, caractérisé en ce que, l'élargissement de l'ébauche par le fluide en surpression étant assez faible, la surpression qui résulte de la résistance à l'écoulement dans l'interstice annulaire existant entre le mandrin de cuisson (56) et la face interne de la paroi de l'ébauche de moulage (10) appliquée contre la douille de refroidissement (52) est alors suffisante pour assurer la mise en appui de cette paroi de l'ébauche contre celle de la douille de refroidissement (52).

13. Procédé selon la revendication 9, caractérisé en ce qu'on retire le mandrin de cuisson (56) au moins en partie hors de l'ébauche (10), une fois que la paroi de l'ébauche a été mise en appui contre la douille de refroidissement (52) sous l'effet de la surpression interne.

14. Procédé selon la revendication 9, caractérisé en ce que, après un refroidissement suffisant de l'ébauche (10), on fait coulisser la douille de refroidissement (52) pour l'amener dans une position éloignée de l'ébauche (10), afin de libérer l'ébauche (10) et de saisir celle-ci au moyen d'un support (75) qu'on amène de l'extérieur pour le mettre en prise sur l'ébauche, après quoi on écarte de l'ébauche (10) le mandrin de fond (50) et on extrait le mandrin de maintien (55) hors de l'ébauche (10).

15. Procédé selon la revendication 9, caractérisé en ce que le mandrin de cuisson (56) présente un diamètre externe qui est plus important que le diamètre interne de la partie de la paroi de l'ébauche (10) qui n'a pas subi un élargissement préalable, et en ce que cette partie de la paroi de l'ébauche (10) qui n'a pas été élargie au préalable subit une augmentation de diamètre pur assurer l'orientation dans le sens périphérique de la matière thermoplastique dont elle est constituée.

16. Procédé selon la revendication 15, caractérisé en ce que, avant l'élargissement de l'ébauche (10) provoqué par l'introduction du mandrin de cuisson (56), on écarte le mandrin de maintien (55) d'une faible distance du fond (12) de l'ébauche (10), cette distance d'écartement correspondant au moins au raccourcissement subi par l'ébauche du fait de l'augmentation de son diamètre provoquée par le mandrin de cuisson (56).

17. Procédé selon la revendication 15, caractérisé en ce que, avant l'élargissement de l'ébauche (10) provoqué par l'introduction du mandrin de cuisson (56), on écarte le mandrin de fond (50) par rapport à l'ébauche (10) d'une distance qui correspond au moins à la valeur de l'allongement élastique et temporaire de l'ébauche (10).

18. Procédé selon la revendication 9, caractérisé en ce qu'on amène à nouveau en appui contre le fond (12) de l'ébauche (10) le mandrin de maintien (55) et le mandrin de fond (50), après l'opération d'élargissement et pendant l'opération de durcissement à chaud, pour assurer le mantien de l'ébauche (10) dans la région du fond (12).

19. Procédé selon la revendication 1, caractérisé en ce qu'on donne une forme cylindrique à la paroi (18) de l'ébauche (10).

20. Dispositif pour fabriquer des corps creux en matière thermoplastique orientée, à partir d'ébauches (10) pourvues d'un fond (12) et d'une paroi pouvant être durcie à chaud au moyen d'un mandrin de cuisson chauffé (56) prévu pour être introduit dans l'ébauche (10), caractérisé en ce qu'il comporte, pour assurer un élargissement préalable de l'extrémité (23) de l'ébauche (10), un mandrin conique chauffé (32) prévu pour être engagé dans cette extrémité ouverte, la partie terminale de ce mandrin qui est prévue pour être introduite dans l'ébauche (10) étant adaptée à la section transversale de l'ébauche (10), et ce mandrin ayant une forme qui va en s'amincissant vers son extrémité libre, en ce que la partie de ce mandrin (32) qui assure l'élargissement de l'ébauche (10) présente en coupe longitudinale un profil linéaire ou concave, et en ce que le mandrin de cuisson (56) a la forme d'un douille et est monté à coulisse sur un mandrin de maintien (55) prévu pour être introduit dans l'ébauche (10).

21. Dispositif selon la revendication 20, caractérisé en ce que le mandrin conique (32), entre sa partie destinée à assurer l'élargissement de l'ébauche (10), et son extrémité libre, présente une partie ayant en coupe longitudinale un profil convexe.

22. Dispositif pour fabriquer des corps creux en matière thermoplastique orientée, dont la paroi peut être durcie à chaud par l'introduction d'un mandrin de cuisson chauffé (56), ce dispositif comportant un mandrin de fond (50) disposé en regard de l'extrémité d'une ébauche (10) où se trouve le fond de celle-ci, ce mandrin de fond (50) pouvant coulisser parallèlement à l'axe longitudinal de l'ébauche (10) et présentant une tête (60) dont la face externe est sensiblement adaptée à épouser le contour externe du fond, caractérisé en ce qu'il comporte en regard du côté ouvert de l'ébauche (10) un mandrin de maintien (55), monté à coulisse parallèlement à l'axe de l'abauche (10), un mandrin de cuisson creux (56) coaxial au mandrin de maintien (55) par rapport auquel il peut coulisser, et une bague de serrage (57) montée de manière coaxiale autour du mandrin de cuisson (56), et en ce qu'il comporte en outre en regard de l'extrémité de l'ébauche (10) où se trouve le fond de celle-ci une douille de soutien (51) coaxiale au mandrin de fond (50) et pouvant coulisser en longueur dans le sens axial par rapport à celui-ci, ainsi qu'une douille de refroidissement (52) montée de manière coaxiale autour de la douille de soutien (51) par rapport à laquelle cette douille de refroidissement peut coulisser, et une bague de serrage (53) coaxiale au mandrin de fond (50) et pouvant coulisser par rapport à ce dernier.

23. Dispositif selon l'une des revendications 20, 22, caractérisé en ce que la face d'extrémité (62) du mandrin de cuisson (56) et la face d'extrémité (65) de la douille de soutien (51) sont adaptées l'une à l'autre.
